# EUROPEAN PATENT SPECIFICATION

(11) **EP 2 123 953 B1**
(45) Date of publication and mention of the grant of the patent: **14.08.2013**
(21) Application number: 08703456.7
(22) Date of filing: 18.01.2008
(51) Int. Cl.: F16J 15/32, F16J 15/34

(54) **SHAFT SEAL DEVICE**
WELLENDICHTUNGSVORRICHTUNG
DISPOSITIF DE JOINT POUR ARBRE

(30) Priority: 19.01.2007 JP 2007010234
(43) Date of publication of application: 25.11.2009
(73) Proprietor: Eagle Industry Co., Ltd., Minato-ku Tokyo 105-8587 (JP)
(72) Inventor: TAKIGAHIRA, Yoshiaki, Minato-ku Tokyo 105-8587 (JP); IIZUKA, Jiro, Isesaki-shi Gunma 372-8502 (JP)
(74) Representative: Isarpatent
(86) International application number: PCT/JP2008/050606
(87) International publication number: WO 2008/088041

(56) References cited:
- DE-A1- 10 050 983
- JP-A- 06 213 331
- JP-A- 2006 342 826
- JP-U- 3 113 221
- JP-U- 04 073 659
- JP-Y1- 45 003 219

## Description

### TECHNICAL FIELD

The present invention relates to a shaft seal apparatus for sealing a sealing fluid between a housing and a shaft in a rotating device such as, for example, a compressor for air conditioner, a pump, and an engine or so. Particularly, the present invention relates to the shaft seal apparatus for appropriately sealing the sealing fluid in the rotating device in which a pressure of the sealing fluid is high, or the pressure of the sealing fluid varies randomly between the high pressure condition and the low pressure condition. Specifically, the present invention relates to the shaft seal device which is appropriate to seal a refrigerant CO₂ in the compressor (CO₂ compressor) of the air conditioner using CO₂ as the refrigerant, for example.

### BACKGROUND ART

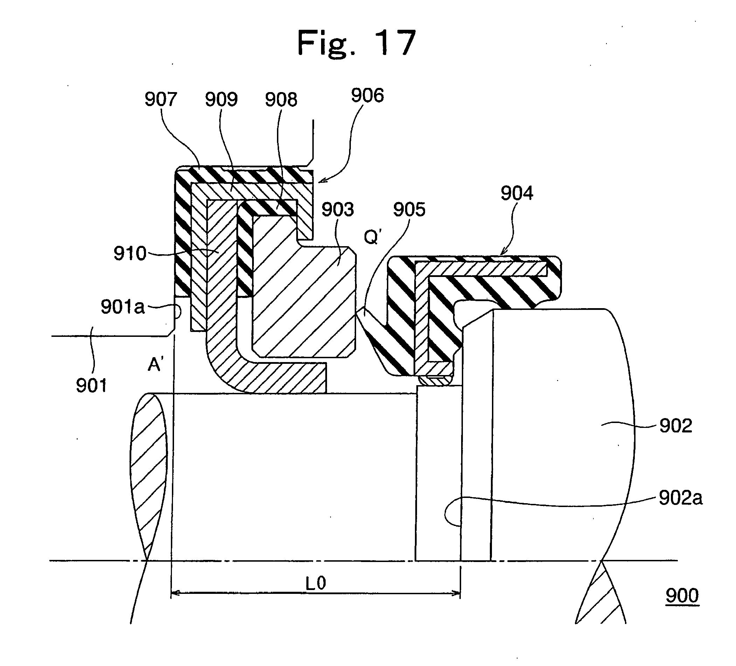

Conventionally, a constitution shown in Fig.17 is disclosed as a shaft seal apparatus applied to a rotating device of, for example, a compressor or so for an air conditioner (for example, refer to JP Unexamined Patent Publication 2003-214541).
The shaft seal apparatus 900 shown in Fig.17 has a constitution in which it comprises a sealing ring 903 at the fixed side (hereinafter referred as stationary ring) sealingly engaged to the housing 901 of the rotating device, and a rubber made end face lip seal 904 which closely engages with a shaft 902 and rotates together; and forms a sealed sliding face by inclining the protruding lip 905 formed on the end face lip seal 904 towards the outer radial direction with respect to the end face of the stationary ring 903 to closely contact by extension. Thereby, it is constituted so that the sealing fluid Q' existing at the outer peripheral portion of the protruding lip 905 is prevented from leaking to the inner radial side than the stationary ring 903 and the atmosphere space A' of the back face side of the stationary ring 903.

When assembling the shaft seal apparatus having such constitution, the end face lip seal 904 is pushed against a step end face 902a of the shaft 902. That is, the assembling position of the end face lip seal 904 is referenced to the shaft step end face 902a. On the other hand, the stationary ring 903 which forms the sealed sliding face by facing against the end face lip seal 904is pushed against a step side face 901a of a housing 901 of the rotating device via a fixed side seal 906 comprising a packing 907 and 908, an reinforcement case 909, and a seal lip 910 as the constitution parts. That is, the assembling position of the stationary ring 903 is referenced to the housing step side face 901a.
Therefore, the axial direction fixed distance (hereinafter referred as the seal assembled length) L0 between the fixed side seal 906 and the end face lip seal 904 when the stationary ring 903 and the end face lip seal 904 is assembled to the rotating device rely on the assembled size (the relative position) between the housing 901 and shaft 902 of the rotating device.
Other examples of prior art apparatus are described in the German Patent Publication No. DE 100 50 983 A1, showing all the features of the preamble of claim 1, and Japanese Patent Publication No. JP 45-003219 Y1.

### DISCLOSURE OF THE INVENTION

### TECHNICAL PROBLEMS TO BE SOLVED BY THE INVENTION

In a shaft seal apparatus 900 having such constitution, the seal assembled length L0 when the stationary ring 903 and the end face lip seal 904 are assembled to the rotating device, has great influence on the sealing ability, and it is important to make this in an appropriate length.
Specifically, if the axial direction separation distance between the end face lip seal 904 and the stationary ring 903 increases, the sliding face area between the protruding lip 905 and the stationary ring 903 becomes small and the load stress of the sliding face becomes large. Then, when the separation distance becomes larger than the predetermined distance, the sliding face area of the protruding lip 905 becomes extremely small and the load stress is focused which may cause an excessive wear of the sliding face or the breakage of the protruding lip 905. Furthermore, the protruding lip 905 may not be able to follow against the sliding face of the stationary ring 903, or it may be disconnected, thus there may be a possibility to cause what is known as "opening of the seal face".

Also, on the other hand, if the axial direction separation distance between the end face lip seal 904 and the stationary ring 903 becomes smaller, then the diameter of the sliding face between the protruding lip 905 and stationary ring 903 becomes larger which causes to increase the relative sliding speed of the sliding face, and also it increases the pressure receiving area of the sliding face causing to increase the load from the pressure applied on the sliding face. Furthermore, the sliding face load caused by the elastic repulsive force of the protruding lip 905 increases. As a result, there may be a possibility of an exceptional increase of the sliding face temperature or the excessive wear of the sliding face, and furthermore the protruding lip 905 may break.
As said in the above, when the distance between the stationary ring 903 and the end face lip seal 904 in axial direction is not within the predetermined range, that is when the seal assembled length L0 deviates largely from the defined value, there is a high probability to cause a trouble due to the leakage of the sealing fluid Q'. Therefore, in order to exhibit a desired ability of the shaft seal apparatus 900 having such constitution, it is important to control the seal assembled length L0 within a defined value having a deviation (error) as small as possible, when assembling the seal device.

On the other hand, as said in above, in such shaft seal apparatus 900, the end face lip seal 904 is engaged fixed against the shaft 902, thus the end face lip seal 904 does not have a constitution in which the end face lip seal 904 moves towards the axial direction on the shaft 902, and further the end face lip seal 904 being pressed against the stationary ring 903 by the elastic means such as a spring. Therefore, the allowable margin of error of the seal assembled length L0 is limited within the range in which the protruding lip 905 of the side lip seal 904 can elastically deform and follow against the sliding face of the stationary ring 903. In other words, it is limited by the length of the protruding lip 905.
To elongate the length of the protruding lip 905 in order to enlarge the allowable margin of error of the seal assembled length L0 increases the diameter of the sliding face between the protruding lip 905 and the stationary ring 903, that is, the relative sliding speed of the sliding face, also it is increases the pressure receiving area, that is, the load caused by the pressure to the sliding face, thus it is not preferable. Hence, it is necessary to design the length of the protruding lip 905 as short as possible. As a result of that, the allowable margin of error of the seal assembled length L0 of the shaft seal apparatus 900 having such constitution is limited to extremely small value compared to the end face seal of, for example, the mechanical seal or so.

The assembling method of the shaft seal apparatus 900 comprising the conventional end face lip seal 904 has a problem that it is very difficult to control the seal assembled length (L0) at the defined value, that is, to assemble within the allowable margin or error.
As said in above, the seal assembled length L0 depends on the assembled size (the relative position) of the housing 901 and the shaft 902 of the rotating device. However, the rotating device usually uses many parts (bearings or so) other than the housing 901 or the shaft 902 or so. Thus, the error of the assembled size between the housing 901 and the shaft 902, that is the variation, is the value which combines the error of each of those parts and the error of assembling the parts each other. As a result, the variation of the seal assembled length L0 of the shaft seal apparatus 900 is the range which combines the variation of the above assembled size and the variation according to the shaft seal device.

Therefore, conventionally, before assembling the shaft seal apparatus 900, the rotating device was pre-assembled to measure the relative position of the housing 901 and the shaft 902, next the rotating device was de-assembled, then after mounting, for example, the shim, the metal washer or so for modifying the difference between the measured relative position and the defined value on one or both of the housing step side face 901a which becomes the reference face for assembling the stationary ring or the shaft step end face 902a which is the reference face for assembling the end face lip seal 904, and the shaft seal apparatus 900 was assembled, followed by reassembling the rotating device.
However, the rotating device is substantially assembled twice based on such assembling method, thus the work is complicated and the number of steps increased causing a longer assembling time. Also, due to the problem of the size accuracy at mounting the parts, or due to the problems of reproducibility at reassembling, there is a limitation to set the seal assembled length L0 of the shaft seal apparatus 900 of which has been assembled to have the precise defined value.

As for the shaft seal apparatus 920 to solve such problems, as shown in Fig.18, the constitution in which the diameter D1 of the base portion of the protruding lip 925 and the shaft diameter D2 of the engagement portion 926 has the same diameter are proposed by the present inventors.
In the shaft seal apparatus having such constitution, since the diameter D1 of the base portion of the protruding lip 925 are the same as the shaft diameter D2 of the engagement portion 926, no force of the axial direction of the shaft 902 due to the pressure P of the sealing fluid Q is produced, in regards with the area W2 which is the area from the base portion of the protruding lip 925 to the back end face 924b of the end face lip seal 924.
On the other hand, in regards with the area W1 which is the area from the base portion of the protruding lip 925 to the sliding face 903a, the force F1 acting towards the back end face 924b direction from the protruding lip 925 side with respect to the end face lip seal 924 (the external force F1 of the axial direction due to the sealing fluid pressure P) is produced due to the repulsion force of the effect of the protruding lip 925 being pushed against the sliding face 903a by the pressure P.

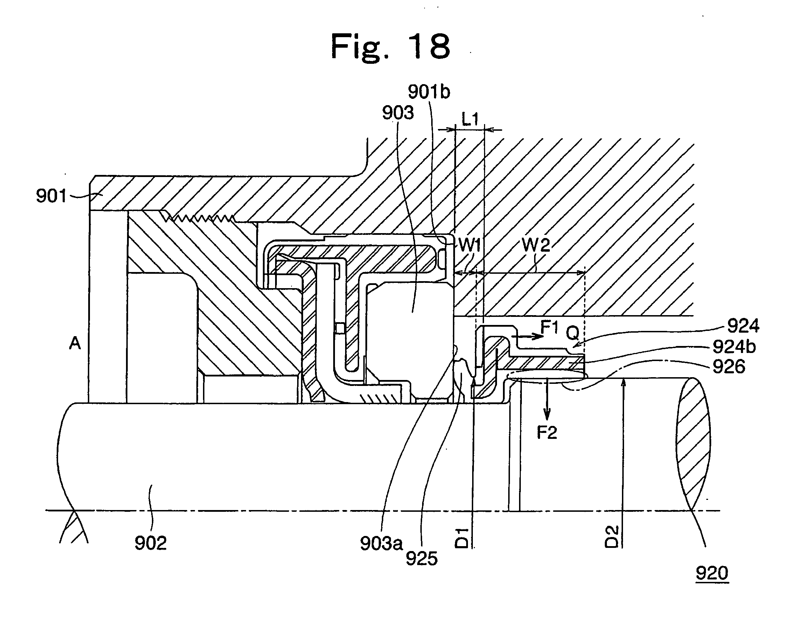

Since this external force F1 is caused by the pressure P of the sealing fluid, its force is small in the rotating device in which the pressure of the sealing fluid doesn't become high. Therefore, in such device, the end face lip seal 924 is fixed to the shaft 902 without moving towards the axial direction of the shaft 902 due to the radial interference force F2 caused by the rubber elasticity of the engagement portion 926 of the end face lip seal 924. Furthermore, in such device, the relative movement towards the axial direction and the rotating direction of the end face lip seal 924 and the shaft 902 are further prevented, and there is no need to define the assembling position of the end face lip seal 924 to the step end face of the shaft 902. Moreover, there is no need to support the end face lip seal 924 at the shaft step end face while operating the rotating device. That is, the relative position between the end face lip seal 924 and the shaft 902 can be set arbitrary, and it is possible to place the reference face of the assembling position of the end face lip seal 924 at the housing 901 side, furthermore it can be the same as the assembling reference face of the stationary ring 903 (in the example shown in Fig.18, the reference face 901b). That is, in the rotating device in which the pressure P of the sealing fluid doesn't become high, because of the shaft seal apparatus having the constitution as shown in Fig.18, it is possible to provide the shaft seal apparatus which can be assembled precisely as the defined value due to the simple steps.

As for the refrigerant for the air conditioner device, for example, of the car air conditioner or so, conventionally Freon gas is widely used. However, since Freon gas may leak out from the air conditioning device, or may not be appropriately collected from the used air conditioner device, Freon gas may be dispersed in to the atmosphere. This has been a world wide problem as it has significant negative influence on the global warming. Therefore, as for the alternative refrigerant of Freon gas, so-called natural refrigerant which has a small global warming potential has been considered. Among those, it is preferable to use CO₂ as the alternative refrigerant, because CO₂ liquefy relatively easy. And it is suitable since it can be used as a heater (heat pump) addition to be used as a cooler due to its thermal characteristic. Also, it is suitable from the point of the pollution and the safety since it has small toxicity. In the CO₂ compressor in the refrigerating cycle which uses this CO₂ as the refrigerant, the pressure of the sealing fluid (the mixed fluid of refrigerant CO₂ and the mist form or drop form oil) is about 3MPa to about 12MPa, which is significantly high pressure range for the air conditioner device.

Then, if the shaft seal apparatus as shown in Fig.18 is applied to the CO₂ compressor, since the pressure P of the sealing fluid is high, which is about 3 MPa to about 12MPa, the external force F1 caused by the pressure P is significantly large, the end face lip seal 924 may not be possible to be fixed against the shaft 902 by the radial interference force F2 caused by the rubber elasticity of engagement portion 926 of the end face lip seal 924.
If the external force F1 becomes larger than the force to fix the end face lip seal 924 to the shaft 902 due to the radial interference force F2, the end face lip seal 924 moves away from the stationary ring 903, thereby the protruding lip 925 may not sufficiently follow against the sliding face 903a, or the protruding lip 925 may not reach to the sliding face 903a causing "seal face opening", and the sealing fluid Q leaks.

In order to avoid such situation, the end face lip seal 924 can be designed in advance so that the force which fixes the end face lip seal 924 to the shaft 902 by radial interference force F2 is larger than the estimated external force F1 in the CO₂ compressor. However, when it is actually used, there are problems such as that the end face lip seal 924 becomes difficult to assemble to the shaft 902, or that the engagement portion 926 of the end face lip seal 924 may break (rip off) or so when assembling. Therefore, for the rotating device in which the pressure P of the sealing fluid becomes high, such as CO₂ compressor, it was difficult to apply the shaft seal apparatus such as shown in Fig.18.

The present invention is achieved reflecting such problems, and the objective thereof is to provide the shaft seal apparatus capable to assemble the seal assembled length at the defined value due to the simple steps, even in the rotating device in which the pressure of the sealing fluid becomes high or in the rotating device in which the pressure changes to high pressure and low pressure.

### MEANS FOR SOLVING THE TECHNICAL PROBLEMS

The present invention provides a shaft seal apparatus with the features recited in claim 1. Preferred features of the invention are set out in the dependent claims. In order to solve said problems, the shaft seal device of the present invention comprises; a stationary ring fixed to a housing in which a shaft passes through, and an end face lip seal engaging with said shaft, wherein
a sealing fluid is sealed along said shaft by closely contacting a protruding lip of said end face lip seal with a sliding face of said stationary ring in a slidable manner; and
a diameter (D1) of a minimum diameter portion of a sealing fluid side surface of said protruding lip is larger than a diameter (D2) of a portion of said end face lip seal engaging with the shaft.

According to the shaft seal device having such constitution, the external force of the axial direction of the shaft acting from the sealing fluid side to the protruding lip side and the external force of the axial direction of the shaft from the protruding lip to the sealing fluid can be equilibrated, or the latter force can be made small, thus the end face lip seal is maintained at the assembling position without moving towards the axial direction of the shaft, even in the rotating device in which the pressure of the sealing fluid is high, or the pressure changes between high pressure and the low pressure. As a result, there is no need to use the assembling method aligning the assembling position by placing the end face lip seal against the step of the shaft as it has been done conventionally, and the end face lip seal can be assembled based on the same reference as the stationary ring. Thus, the relative position of the stationary ring and the end face lip seal can be designed precisely to the value, and the shaft seal device exhibiting suitable sealing property can be provided.

Preferably, the shaft seal apparatus of the present invention is characterized by a diameter (D3) of a portion of said end face lip seal where said protruding lip is provided is smaller than the diameter (D2) of the part of said end face lip seal engaging with the shaft.

According to the shaft seal apparatus having such constitution, the end face lip seal and the shaft becomes difficult to slip.

Also preferably, in the shaft seal apparatus of the present invention, said end face lip seal engages with said shaft at a position defined as a predetermined assembling length with respect to a reference position of said housing, and
said stationary ring is placed by aligning with respect to said reference position.

According to the shaft seal apparatus having such constitution, it is possible to assemble the end face lip seal and the stationary ring by using the predetermined reference surface of the housing as a reference, and thus it is possible to assemble so that the seal assembled length is precisely the defined value due to the simple steps.

Also preferably, in the shaft seal apparatus of the present invention, said end face lip seal comprises a rubber made flexible portion constituting the surface of said protruding lip and the end face lip seal,
a reinforcement ring buried within said flexible portion to maintain a form of said end face lip seal , and
a part of a peripheral surface of said reinforcement ring is removed at an engagement portion with said shaft.

According to the shaft seal device having such constitution, the pressure of the sealing fluid directly acts on to the flexible portion of the area where the reinforcement ring has been removed, and the radial interference force press-contacting the end face lip seal to the shaft acts effectively. Also, the reinforcement ring easily deforms elastically due to the pressure of the sealing fluid against the portion where the reinforcement ring is present, and thus large radial interference force is produced even at the portion where the reinforcement is present. As a result, the radial interference force against the shaft of the end face lip seal becomes even stronger, thus it is possible to provide the shaft seal apparatus capable of assembling the seal assembled length precisely at the defined value due to the simple steps.

Also preferably, the shaft seal apparatus of the present invention is characterized by further comprising a fitting means to fit said end face lip seal and said shaft so that said end face lip seal does not relatively rotate against said shaft.

According to the shaft seal apparatus having such constitution, the relative movement of the end face lip seal and the shaft towards the shaft rotating direction is certainly prevented, and thus the problems such as the leakage of the sealing fluid or the breakage of the seal can be effectively prevented.

Also preferably, the shaft seal apparatus of the present invention is characterized by having, said shaft comprises a step at which an outer diameter changes, and
said end face lip seal covers over the step of said shaft and engages with the shaft capable to control an axial position with respect to said shaft within the range crossing over the step.

According to the shaft seal apparatus having such constitution, the end face lip seal can be appropriately placed by using the step portion of the shaft.

Also preferably, the shaft seal apparatus of the present invention is characterized by said stationary ring being fixed to said housing by sandwiched between a step portion formed at said housing and a stopper ring placed within said housing, and other member being placed to hold the stationary ring therebetween depending on the needs.

According to the shaft seal apparatus having such constitution, the stationary ring can be assembled and de-assembled by using a simple instrument and simple method. Also, the precise assembling condition and a high reliability can be maintained as long as the components sizes are controlled, thus the cost can be further reduced.

### BREIF DESCRIPSION OF DRAWINGS

[Fig.1] Fig.1 is an axial direction cross sectional diagram showing the shaft seal apparatus of the first embodiment of the present invention.
[Fig.2A] Fig.2A is the end face lip seal of the shaft seal apparatus illustrated in Fig.1, and it shows a front view diagram of the stationary ring side end face of the end face lip seal looking from the protruding lip direction.
[Fig.2B] Fig.2B illustrates the end face lip seal of the shaft seal apparatus shown in Fig.1 and it is an axial direction cross sectional diagram at A-O of Fig.2B.
[Fig.3A] Fig.3A a diagram explaining the assembling method of the shaft seal apparatus shown in Fig.1, and it is an axial direction cross sectional diagram showing the end face lip seal pushed into the housing by the mounting jig.
[Fig.3B] Fig.3B is a side view diagram of the mounting jig shown in Fig.3A.
[Fig.3C] Fig.3C is a front view diagram of the mounting jig shown in Fig.3A.
[Fig.4A] Fig.4A is a diagram of the end face lip seal according to the second embodiment of the present invention and it is an axial direction cross sectional diagram at A-O-A' of Fig.4B.
[Fig.4B] Fig.4B is a diagram of the end face lip seal according to the second embodiment of the present invention and it is a cross sectional diagram at B-B' face of Fig.4A vertical to the axis.
[Fig.4C] Fig.4C is a side view diagram of the reinforcement ring of the end face lip seal shown in Fig.4A.
[Fig.5A] Fig.5A is a diagram of the end face lip seal according to the third embodiment of the present invention and it is an axial direction cross sectional diagram at A-O-A' of Fig.5B.
[Fig.5B] Fig.5B is a diagram of the end face lip seal according to the third embodiment of the present invention, and it is a cross sectional diagram at B-B' face of Fig. 5A vertical to the axis.
[Fig.5C] Fig.5C is a side view diagram of the reinforcement ring of the end face lip seal shown in Fig.5A.
[Fig.6A] Fig.6A is a diagram of the end face lip seal according to the forth embodiment of the present invention, and it is an axial direction cross sectional diagram at A-O-A' of Fig.6B.
[Fig.6B] Fig.6B is a diagram of the end face lip seal according to the forth embodiment of the present invention, and it is a cross sectional diagram at the B-B' face of Fig.6A vertical to the axis.
[Fig.6C] Fig.6C is a side view diagram of the reinforcement ring of the end face lip seal shown in Fig.6A.
[Fig.7A] Fig.7A is a diagram of the end face lip seal according to the fifth embodiment of the present invention, and it is an axial direction cross sectional diagram at A-O-A' of Fig.7B.
[Fig.7B] Fig.7B is a diagram of the end face lip seal according to the fifth embodiment of the present invention and it is a cross sectional diagram at B-B' face of Fig.7A vertical to the axis.
[Fig.8A] Fig.8A is a diagram of the end face lip seal according to the sixth embodiment of the present invention and it is an axial direction cross sectional diagram at A-O-A' of Fig.8B.
[Fig.8B] Fig.8B is a diagram of the end face lip seal according to the sixth embodiment of the present invention and it is a cross sectional diagram at B-B' face of Fig.8A vertical to the axis.
[Fig.9] Fig.9 is an axial direction cross sectional diagram showing the end face lip seal according to the seventh embodiment of the present invention.
[Fig.10] Fig.10 is an axial direction cross sectional diagram showing the end face lip seal according to the eighth embodiment of the present invention.
[Fig.11A] Fig.11A is a diagram of the end face lip seal according to the ninth embodiment of the present invention and it is an axial direction cross sectional diagram at A-O-A' of Fig.11B.
[Fig.11B] Fig.11B is a diagram of the end face lip seal according to the ninth embodiment of the present invention and it is a cross sectional diagram at B-B' face of Fig.11A vertical to the axis.
[Fig.12] Fig.12 is an axial direction cross sectional diagram showing the end face lip seal according to the tenth embodiment of the present invention.
[Fig.13A] Fig.13A is an axial direction cross sectional diagram to explain the constitution and assembling method of the shaft seal apparatus according to the eleventh embodiment of the present invention.
[Fig.13B] Fig.13B is a front view diagram of the seal fixing component (a bevel shape stopper ring) used for assembling the shaft seal apparatus shown in Fig.13A.
[Fig.13C] Fig.13C is a cross sectional diagram of a ring form portion at A-A' of Fig.13B of the seal fixing component shown in Fig.13B.
[Fig.14] Fig.14 is a diagram showing the relation between the pressure of the sealing fluid and the force towards the axial direction of the shaft acting on the end face lip seal caused by the pressure of the sealing fluid, at the end face lip seal of various different diameter ratio of the base portion of the protruding lip and the inner diameter of the engagement portion.
[Fig.15] Fig.15 is a diagram showing the relation between the diameter ratio of the base portion of the protruding lip and the inner diameter of the engagement portion, and the external force, at given constant pressure.
[Fig.16] Fin.16 is a diagram showing the relation between the size ratio of the inner diameter of the engagement portion of the end face lip seal and the minimum diameter of the end face lip seal, and the stationary torque ratio.
[Fig.17] Fig.17 is an axial direction cross sectional diagram showing the conventional shaft seal apparatus.
[Fig.18] Fig.18 is an axial direction cross sectional diagram showing other conventional shaft seal apparatus.

### THE PREFFERED EMBODIMETNS OF THE INVENTION

### The First Embodiment

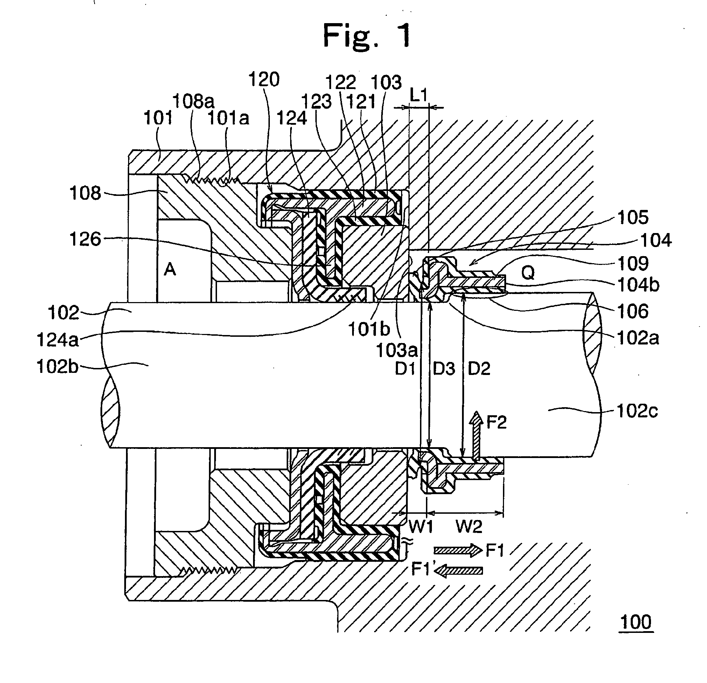

The first embodiment of the present invention will be explained referring to Fig.1 to 3.
Fig.1 is a cross sectional diagram showing the structure of the shaft seal apparatus 100 of the first embodiment.
The shaft seal apparatus 100 of the present embodiment is assembled to the shaft 102 of the rotating device, and seal the sealing fluid Q along the shaft 102, in the housing 101 in which the shaft 102 passes through.

As shown in Fig.1, the shaft seal apparatus 100 comprises fixed side seal member 120 and stationary ring 103 assembled to the housing 101 of the rotating device, and the end face lip seal 104 which rotates as one body by closely engaging to the shaft 102. Then, the shaft seal apparatus 100 is constituted so that the protruding lip 105 formed on the end face lip seal 104 closely contacts by inclining towards the outer diameter direction with respect to the sliding face 103a which is the end face of the stationary ring 103; thereby, the sealing fluid Q present in the peripheral portion of the protruding lip 105 is prevented from leaking to the inner diameter than stationary ring 103, to the atmospheric space A of the back face side.

The shaft 102 is formed with step 102a at the slightly sealing fluid Q side of the protruding lip 105 of the end face lip seal 104, and from this step 102a, the portion of the protruding lip 105 side (the fixed side seal member 120 side) is a small diameter portion 102b and the portion in which the sealing fluid Q is placed is a large diameter portion 102c. That is, the shaft 102 has larger diameter at the sealing fluid Q side from the step 102a than at the protruding lip 105 side.
Furthermore, the end face lip seal 104 is assembled to the shaft 102 by covering over the step 102a.

The end face lip seal 104 has a cross-sectional formation as shown in the diagram, and has a constitution that the reinforcement ring 109 is buried therein and the rubber material is covering thereof.
At the position facing against the sliding face 103a of the stationary ring 103 which is one of the end portions of the end face lip seal 104, the protruding lip 105 which extends towards outside in a V shaped cross-section is formed. As described in above, the protruding lip 105 is inclined towards to the outside as if it is diverging towards the sliding face 103a of the stationary ring 103, and the closely contacting face which is the edge corner portion of the protruding lip 105 seal the sealing fluid Q by elastically contacting to the opposing sliding face 103a. This protruding lip 105 has a constitution that it deforms in a way that the inclined angle becomes smaller towards the horizontal direction when it receives a pressure of the sealing fluid from the peripheral side to press contact against the sliding face 103a.

Also the interior portion of the end portion which is the opposite side of the protruding lip 105 of the end face lip seal 104 is formed as the engagement portion 106, and the sealing fluid Q is sealed due to this portion engages to the large diameter portion 102c of the shaft 102, and the end face lip seal 104 is install-fixed to the shaft 102 so that it is difficult to rotate to the rotating direction.
In the end face lip seal 104 of the present embodiment, the diameter D1 (hereinafter referred as the protruding lip minimum diameter D1) of the outer peripheral side surface of the minimum diameter portion of the protruding lip 105 which corresponds to the base portion of the protruding lip 105 of the end face lip seal 104 is constituted so that it is larger than the diameter D2 (inner diameter) of the engagement portion 106 of the end face lip seal 104 engaging with the shaft 102. Also, the minimum diameter of the end face lip seal 104, that is the diameter (inner diameter) D3 of the portion where the protruding lip 105 of the end face lip seal 104 is formed, is made smaller than the diameter (inner diameter) D2 of the portion where said shaft engages with said end face lip seal. Note that, the minimum diameter D3 of this end face lip seal 104 is constituted about the same as the diameter of the small diameter portion 102b of the shaft 102 or slightly larger than the diameter of the small diameter portion 102b, and the sealing fluid is not sealed in this part.

By making the size of the protruding lip minimum diameter D1, the diameter D2 of the engagement portion 106 of the end face lip seal 104 engaging with the shaft 102 and the diameter D3 of the portion where the protruding lip 105 of the end face lip seal 104 is formed, in such relation, the force of the axial direction of the shaft 102 acting towards the protruding lip 105 side from the back end face 104b side of the end face lip seal 104 (the outer force F1') which is caused by the pressure P of the sealing fluid acts on to the end face lip seal 104, and by equilibrating the outer force F1' with the repulsive force F1 of which is the effect of the protruding lip 105 being pushed against the sliding face 103a by the pressure of the sealing fluid; or by making the difference small, the force of the repulsion force which actually acts against the end face lip seal 104 can be made small.
As a result, even when the pressure P of the sealing fluid is high, or even in the rotating device in which the pressure changes between high and low, the end face lip seal 104 is prevented from moving towards the axial direction of the shaft 102 due to the effect of the outer force F1, thus it can be stably maintained in the position where the end face lip seal 104 was placed at the assembling.

Note that, the outer force F1' is a force which is produced by the difference between the diameter D2 of the portion where the shaft 102 of the end face lip seal 104 is engaged and the protruding lip minimum diameter D1, among the pressure P of the sealing fluid acting on the back end face 104b side of the end face lip seal 104; wherein the shaft seal apparatus according to the present invention is D1 > D2, thus it is a force of axial direction acting from the back end side 104b of the end face lip seal 104 to the protruding lip 105 side.

Also, since the force of the axial direction acting against the end face lip seal 104 (the resultant force of F1 and F1') is small or either completely equilibrated, even when the radial interference force F2 caused by the rubber elasticity of the engagement portion 106 of the end face lip seal 104 is designed small, the end face lip seal 104 is securely fixed against the shaft 102. Therefore, when assembling the shaft seal apparatus 100, the resistance when engaging the end face lip seal 104 to the shaft 102 can be made small, thus the installation of the end face lip seal 104 can be improved. Also, the problems such as the breakage (ripped off) of the engagement portion 106 of the end face lip seal 104 or so can be avoided.

Also, the force which moves the end face lip seal 104 to the axial direction of the shaft 102 does not substantially act on the end face lip seal 104, thus the end face lip seal 104 is securely fixed at the position where it was assembled/positioned to the shaft 102. Therefore, taking the reference face 101b of the housing 101 as the face which contact with the sliding face 103a of the stationary ring 103, the end face lip seal 104 can be placed so that the defined distance from this reference face 101b is the predetermined seal assembling length L1. Due to the assembling method described in the following, by assembling the stationary ring 103 also taking the same reference face 101b as the reference, the relative position of the stationary ring 103 and the end face lip seal 104 can be precisely the value as designed, and the appropriate sealing ability can be exhibited and maintained. That is, in regards with the end face lip seal 104, the seal assembling length is not designed by placing the end face lip seal 104 against the step 102a of the shaft as it has been done conventionally.

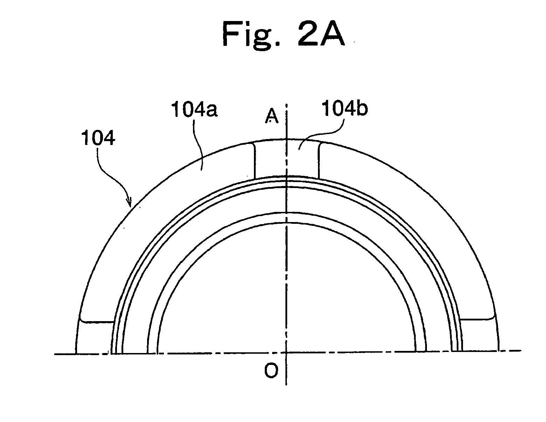

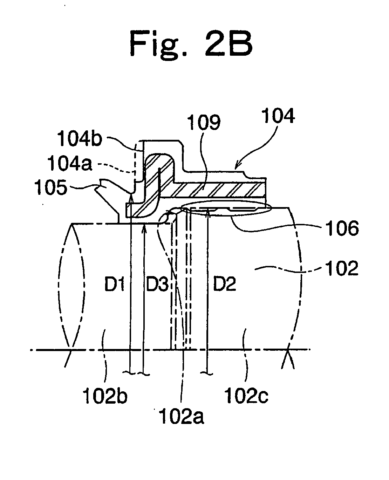

Also, as shown in Fig.2A and Fig.2B, at the end face 104a (the stationary ring side end face) of the side where the protruding lip 105 of the end face lip seal 104 is formed, the thin portion 104b is formed in which the installation jig is fitted when assembling the end face lip seal 104.
Fig.2A is a front view diagram of the stationary ring side end face 104a of the end face lip seal 104 when looking from the protruding lip 105 side. Fig.2B is a cross-sectional diagram of the end face lip seal 104 corresponding to Fig.2A.
As shown in Fig.2A, the thin portion 104b is formed in a groove form in 4 equipartition with respect to the stationary ring side end face 104a.
The assembling method of the shaft seal apparatus 100 will be described in the following, by making the thickness of the rubber material of the stationary ring side end face 104a to be thin in which the installation jigs are connected, the size deformation (pressure deformation) of the rubber material of the end face lip seal 104 caused by the compression of the installation jig can be made significantly small, and the seal assembling length L1 (refer to Fig.1) can be controlled precisely.

The rubber material of the end face lip seal 104 is selected depending on the type of the sealing fluid, and for example, nitrile rubber (NBR), hydrogenated nitrile rubber (HNBR), acrylic rubber (ACM), silicon rubber (VMQ), fluororubber (FKM) or so may be used.
Also, the reinforcement ring 109 of the end face lip seal 104 is made of, for example, iron, steel, stainless steel, aluminum, engineering plastic or so, and is produced by cutting, pressing, or molding.

Back to Fig.1, the stationary ring 103 is placed in the housing 101 via the fixed side seal member 120, and its end face of the end face lip seal 104 side is formed as the sliding face 103a in which the protruding lip 105 of the end face lip seal 104 is press contacted.
The stationary ring 103, as described in the followings, is placed by pushing in towards the end face lip seal 104 by engaging to the housing 101 so that the sliding face 103a of the stationary ring 103 contacts with the reference face 101b of the housing 101.
The stationary ring 103 is made of harder material rather than the surface rubber material of the end face lip seal 104, such as super-hard alloy, silicon carbide, ceramics, cast iron, engineering plastics or so. Note that it is possible to select a carbon which has good characteristic in self-lubrication or a composite material of carbon and the hard material, for the rotating device in which the lubrication condition is difficult.

The fixed side seal member 120 comprises the seal lip 124 at the end potion side of the shaft 102 at the inner peripheral thereof (the distal end side of the end face lip seal 104), and maintains the stationary ring 103 at the end face lip seal 104 side of the inner peripheral thereof.
The fixed side seal member 120 comprises a first packing 121, a ring form reinforcement case 122 fixed to the housing 101 via the first packing 121, a second packing 123 present between the reinforcement case 122, the seal lip 124 and the stationary ring 103 at the inner peripheral side of the reinforcement ring 122, and the seal lip 124.
The first packing 121 seals between the reinforcement case 122 and the housing 101 so that the sealing fluid doesn' t leak from between the reinforcement case 122 and the housing 101.
Also, the second packing 123 seals the outer peripheral of the stationary ring 103 and the inner peripheral of the reinforcement case 122, and further it seals between the end face of the stationary ring 103 side of the seal lip 124 and the end face of a supporting portion 126 of the reinforcement case 122 so that the sealing fluid doesn't leak out.

The seal lip 124 is made of a synthetic resin having low coefficient of friction property such as PTFE (polytetrafluoroethylene). This seal lip 124 has a constitution that the original shape at the molding is formed into a disk shape plate, and further the disk shape plate is bent processed in the axial direction so that the outer peripheral is formed as the holding portion by the fixed side seal member 120. Furthermore, the seal lip 124 has a constitution that the inner peripheral is formed in a cylindrical form constituting the axial direction. Then, the edge inner peripheral face of the seal connecting face 124a of this lip closely contacts sharply with the shaft 102 to seal.

The seal fixing member 108 is a member to fix the stationary ring 103 and the fixed side seal member 120 into the housing 101 along the shaft 102 by inserting, and also the seal fixing member 108 is a member capable to move and fix freely to the axial direction with respect to the housing 101. The seal fixing member 108 in the present embodiment is a member having a cylindrical shape formed with the screw groove 108a at the outer peripheral face except for the both end faces. The screw groove 101a is also formed at the inner peripheral face of the housing 101 where the seal fixing member 108 is formed. The seal fixing member 108 is capable to move the inner portion of the housing 101 along the shaft 102 and also is fixed precisely at the desired position by fitting these screw groove 101a and 108a and inserting into the housing 101.

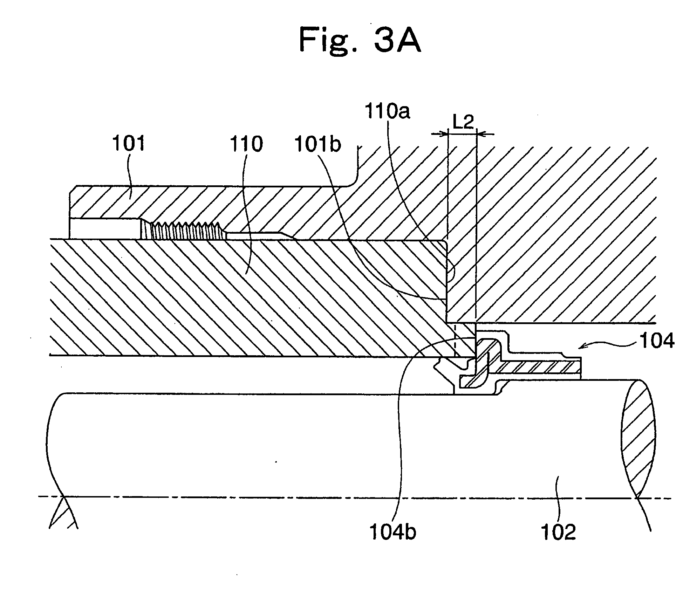

Next, the assembling method of the shaft seal apparatus 100 according to the present invention will be explained referring to Fig.3A to 3C.
When assembling the shaft seal apparatus, as shown in Fig.3A, the end face lip seal 104 is fitted against the rotating device, which the assembling of the shaft 102 and the housing 101 has been completed, using the installation jig respectively.

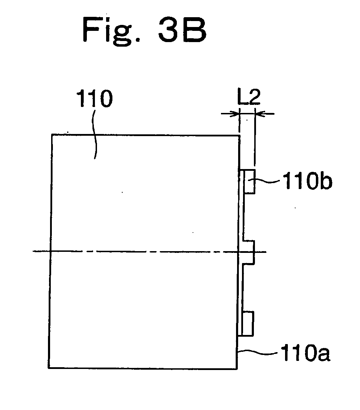

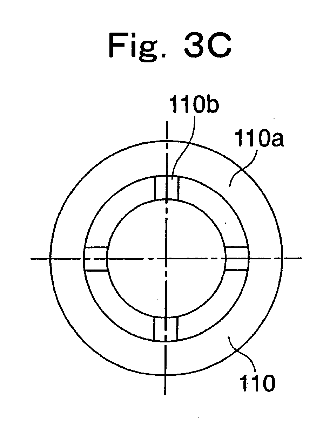

Fig.3B and Fig.3C is a side view diagram and the front view diagram showing the structure of the installation jig 110.
As shown in Fig.3A to Fig.3C, the installation jig 110 is a jig formed with the jig reference edge face 110a at the outer peripheral of the edge face, and formed with the jig projection 110b at the inner peripheral.

The jig reference edge face 110a is a face which contacts with the reference face 101b of the housing 101 when inserting the installation jig 110 into the housing 101, and is a face which becomes the reference for defining the height L2 of the jig projection 110b.
While the jig projection 110b is fitted to the thinner portion 104b of the stationary ring side end face 104a of the end face lip seal 104, the installation jig 110 is inserted into the clearance between the housing 101 and the shaft 102, and pushed in until the jig reference edge face 110a contacts with the reference face 101b of the housing 101. The height L2 of the jig projection 110b from the jig reference edge face 110a is made equal to the seal assembling length L1 which is the clearance between the reference face 101b of the housing 101 (in other words, the sliding face 103a of the stationary ring 103) and the end face lip seal 104.

Once the end face lip seal 104 is installed, then as shown in Fig.1, the stationary ring 103 and the fixed side seal member 120 are inserted in to the housing 101 via the seal fixing member 108, that is the seal fixing member 108 is screwed in, and the sliding face 103a of the stationary ring 103 is placed against to the reference face 101b of the housing 101 by the defined load.
As a result, as shown in Fig.1, the shaft seal apparatus 100 placed with the end face lip seal 104, stationary ring 103 and fixed side seal member 120 is constituted.

As such, in the shaft seal apparatus 100 of the present embodiment, as shown in Fig.2B, the protruding lip minimum diameter D1 of the end face lip seal 104 is formed so that it is larger than the diameter D2 of the engagement portion 106 engaging with the shaft 102 of the end face lip seal 104. Therefore, the external force caused by the pressure of the sealing fluid acting from 2 directions (opposite directions respectively) along the axial direction of the shaft 102 with respect to the end face lip seal 104 can be equilibrated, or can be roughly the same. As a result, the end face lip seal 104 are constituted so that it does not move to the axial direction of the shaft 102. Thus, there is no need to define the assembling position of the end face lip seal 104 for example using the step 102a of the shaft 102, and also there is no need to support the end face lip seal 104 by the step 102a of the shaft 102 when operating the shaft seal apparatus 100.

Therefore, it is possible to set the relative position between the end face lip seal 104 and the shaft 102 arbitrarily, and also it is possible to set the reference face of the end face lip seal 104 assembling position to the housing 101 side, furthermore, the same reference face as the stationary ring 103 can be used.
Moreover, by placing the end face lip seal 104 using the same reference face as the stationary ring 103, the seal assembling length L1 of the shaft seal apparatus 100 can avoid the influence of assembled size error (the variation of the size) between the housing 101 and the shaft 102. As a result, the seal assembling length L1 can be controlled at the defined value precisely and easily, thus the sealing performance and the reliability of the seal is significantly improved.

Also, the portion where the installation jig 110 contacts with the stationary ring side end face 104a of the end face lip seal 104, is formed as the thin portion 104b in which the thickness of the rubber material is thin. Thus, when assembling thereof, the deformation of the end face lip seal 104 caused by contacting with the installation jig 110 can be restrained, and the seal assembling length L1 can be controlled even more precisely.

Note that, the present embodiment has been described in order to make the understanding of the present invention easier, thus it does not limit the present invention in any way. Each element disclosed in the present embodiment includes any design change and equivalent material within the scope of the present invention, and any given suitable modification is possible.
For example, the constitution of the end face lip seal or the method to install the end face lip seal to the shaft, or the constitution of the seal fixing member or so as described in the above can be realized by various embodiments other than the previously described embodiments within the scope of the present invention, and also various modification of the previously described embodiments are possible as well.

### The Second Embodiment

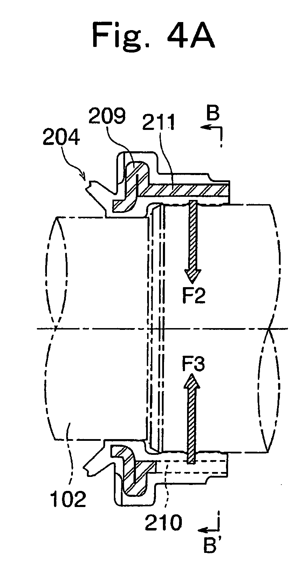

First, the other embodiment of the end face lip seal will be explained referring to Fig.4A to Fig.4C as the second embodiment of the present invention.

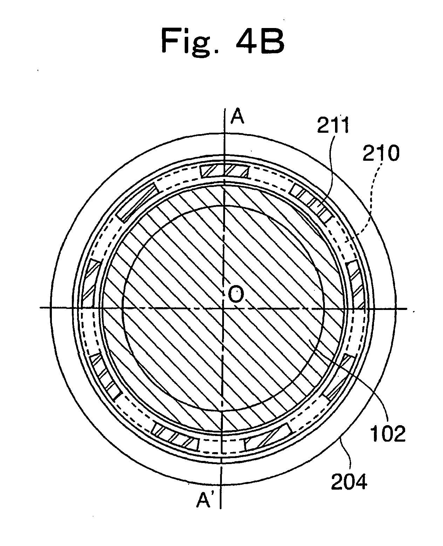

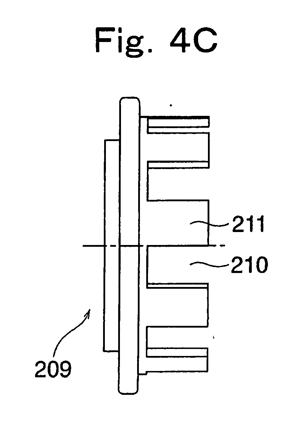

Fig.4A to Fig.4C show structures of the end face lip seal 204 of the second embodiment of the present invention. Fig.4A is a cross sectional diagram, Fig.4B is a cross sectional diagram at B-B' of Fig.4A, and Fig.4C is a side view diagram of the reinforcement ring thereof.
The end face lip seal 204 has the same external shape and the size or so as the end face lip seal 104 of the first embodiment.
However, in the end face lip seal 204, notch 210 is formed to the reinforcement ring 209 which is buried inside. Then, the same rubber material as the surrounding is placed at the portion where the notch 210 is formed.

In the end face lip seal 204 constituted as such, the pressure of the sealing fluid directly acts to the rubber material provided at the notch 210 of the reinforcement ring 209, and the radial interference force F3 which press-contacts the end face lip seal 204 to the shaft 102 is produced.
Also, the beam portion 211 of the reinforcement ring 209 becomes easier to elastically deform due to the pressure of the sealing fluid, thus the same radial interference force F2 is produced at the portion where the notch is not formed in the reinforcement ring 209.

Thus in the end face lip seal 204 comprising the reinforcement ring 209 having such constitution, the radial interference force against the shaft 102 is even stronger compared to the end face lip seal 104 of the first embodiment, and the end face lip seal 204 is even more prevented from moving to the axial direction of the shaft 102. As a result, the seal assembling length of the end face lip seal 204 is maintained for long period of time at the originally assembled size (defined value). Also, the relative movements of the end face lip seal 204 and the shaft 102 to the rotating direction of the shaft 102 is prevented thoroughly, thus the leakage of the sealing fluid or the problems such as the breakage of the seal is prevented even more effectively.

### The Third Embodiment

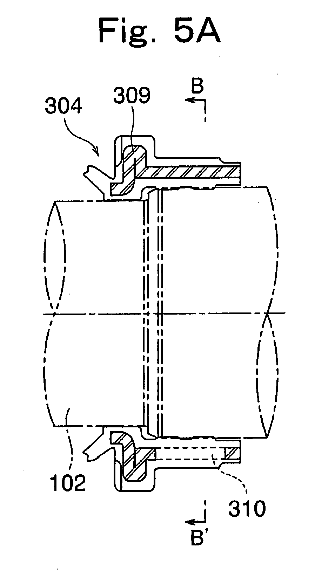

Further other embodiment of the end face lip seal will be explained referring to Fig.5A to Fig.5C as a third embodiment of the present invention.

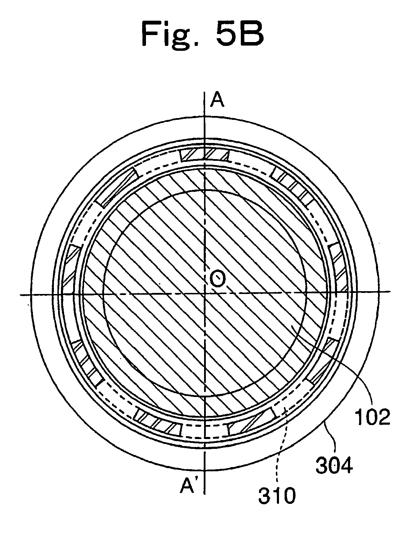

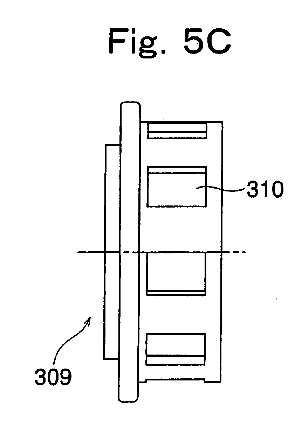

Fig.5A to Fig.5C are diagrams showing the structure of the end face lip seal 304. Fig.5A is a cross sectional diagram thereof (cross sectional diagram at A-O-A' of Fig.5B), Fig.5B is a cross sectional diagram at B-B' of Fig.5A, and Fig.5C is side view of the reinforcement ring 309 thereof.
The end face lip seal 304 has the same external shape and the size or so as the end face lip seal 104 and 204.
However, in the end face lip seal 304, as shown in Fig.5C, an opening 310 is formed at the reinforcement ring 309 which is buried inside, and this opening 310 is provided with the same rubber material as the surrounding.

In the end face lip seal 304 having such constitution, the pressure of the sealing fluid directly acts to the rubber material provided at the opening 310 of the reinforcement ring 309, and the radial interference force which press-contacts the end face lip seal 304 to the shaft 102 is produced.
Therefore, in the end face lip seal 304, the radial interference force against the shaft 102 is even stronger compared to the end face lip seal 104 of the first embodiment, thus it is even more difficult to move towards the axial direction of the shaft 102. As a result, the seal assembling length of the end face lip seal 304 is maintained for long period of time at the originally assembled size (defined value). Also, the relative movements of the end face lip seal 304 and the shaft 102 to the rotating direction of the shaft 102 is prevented thoroughly, thus the leakage of the sealing fluid or the problems such as the breakage of the seal is prevented even more effectively.

### The Fourth embodiment

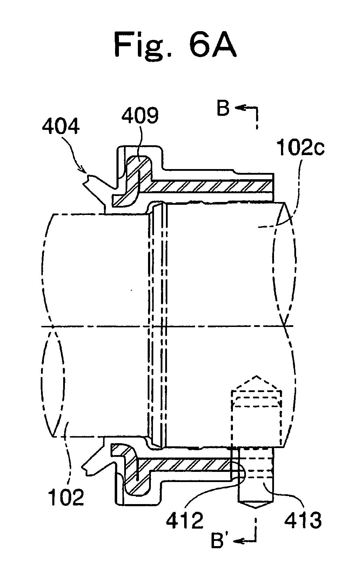

Further other embodiment will explained as the fourth embodiment by referring to Fig.6A to Fig.6C.

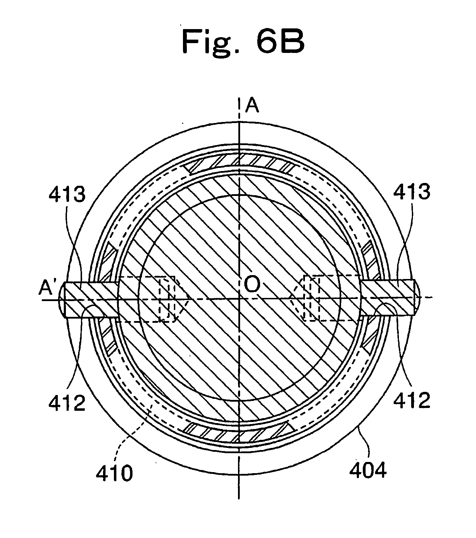

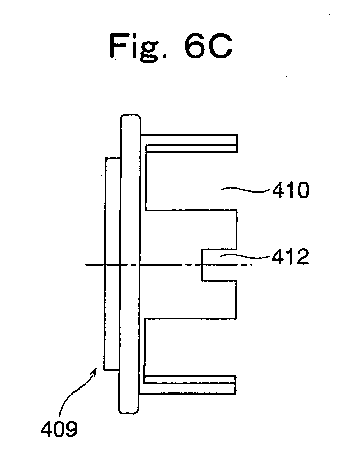

Fig.6A to Fig.6C are diagrams showing the structure of the end face lip seal 404. Fig.6A is a cross sectional diagram thereof (cross sectional diagram at A-O-A' of Fig.6B), Fig.6B is a cross sectional diagram at B-B' of Fig.6A, and Fig.6C is side view diagram of the reinforcement ring 409 thereof.
The end face lip seal 404 has the reinforcement ring 409 with the notch 410, as similar to the end face lip seal 204 of the previously described second embodiment by referring to Fig.4A to Fig.4C. This notch 410 exhibits the same effect as the end face lip seal 204 of the second embodiment.

In the end face lip seal 404, the knock pin 413 is placed by press-insertion into the shaft 102 (large diameter portion 102c) of the portion where the end face lip seal 404 is installed, and the fit notch 412 is formed where this knock pin 413 fits to the reinforcement ring 409 of the end face lip seal 404. Also, as shown in Fig.6A and Fig.6B, the knock pin 413 is fitted to this fit notch 412.
By constituting as such, the relative movement of the end face lip seal 404 and the shaft 102 towards the rotating direction of the shaft 102 is completely prevented mechanically, thus it is preferable since the reliability of the seal is further improved.

Note that, as shown in Fig.6A and Fig.6B, it is preferable to make the diameter of the shaft press-insertion portion of knock pin 413 larger than the width of the fit notch 412 of the reinforcement ring 409. By having such constitution, even when the knock pin 413 is off the shaft press-insertion portion, the knock pin 413 is prevented from falling into the rotating device.

### The Fifth Embodiment

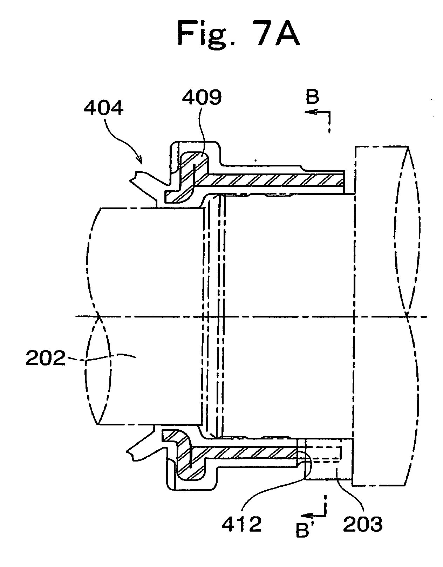

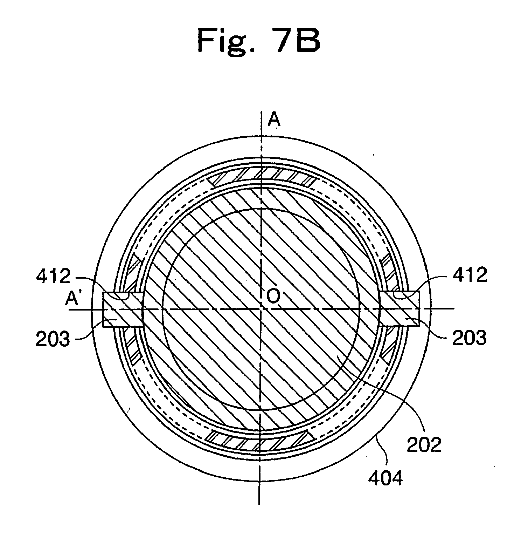

The other structure according to the system to prevent the relative movement of the end face lip seal against the shaft as described in above, that is the structure according to the rotation stopper system, further various embodiments can be considered.
In the end face lip seal 404 of the fourth embodiment described in above by referring to Fig. 6A to Fig.6C, the knock pin 413 was press-inserted into the shaft 102 and the end face lip seal 404 was fitted therein. However, the ridged portion corresponding to the pin 413 can be formed to the shaft in advance.
As for the shaft seal apparatus of such embodiment, it will be explained as the fifth embodiment of the present invention by referring to Fig.7A and Fig.7B.
Fig.7A and Fig.7B are diagrams showing the example of the rotation stopper system of the end face lip seal 404 thereof. Fig.7A is a cross sectional diagram (the cross sectional view at A-O-A' of Fig.7B) of the end face lip seal 404 installed to the shaft 202, and Fig.7B is a cross sectional diagram at B-B' of Fig.7A.

The end face lip seal 404 has the same constitution as the end face lip seal noted with the same reference numerical shown in Fig.6A to Fig.6C as the fourth embodiment. On the other hand, at the shaft 202 where the end face lip seal 404 is installed, the ridged portion 203 is formed at the installing portion of the end face lip seal 404, and this ridged portion 203 of the shaft 202 is fitted to the fit notch 412 of the end face lip seal 404.
By taking such constitution, the relative movement of the end faces lip seal 404 and the shaft 202 towards the shaft rotation direction is completely prevented mechanically, thus the reliability of the seal further improves.

### The Sixth Embodiment

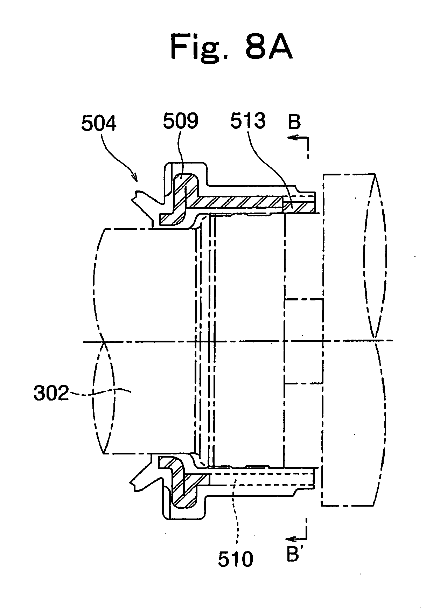

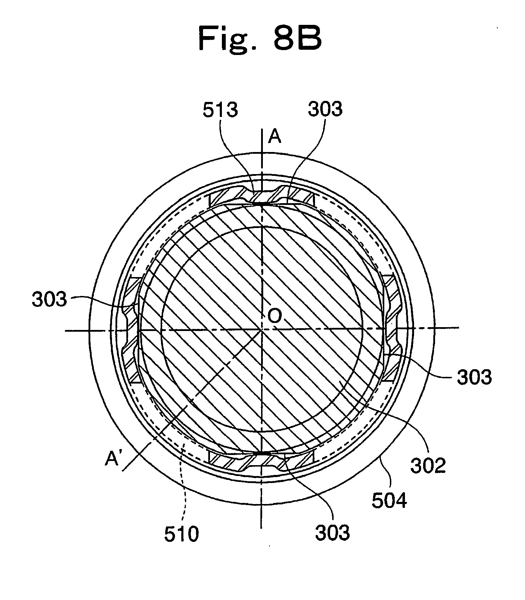

Further other embodiment according to the rotation stopper system between the shaft and the end face lip seal will be explained as the sixth embodiment of the present invention by referring to Fig.8A and Fig.8B.
Fig.8A and Fig.8B are diagrams showing the other embodiment of the rotation stopper system of the end face lip seal. Fig.8A is a cross sectional diagram (the cross sectional view at A-O-A' of Fig. 8B) of the end face lip seal 504 installed to the shaft 302, and Fig.8B is a cross sectional diagram at B-B' of Fig.8A.

The present embodiment has a dented process portion 513 at the reinforcement ring 509 of the end face lip seal 504, and also a chamfer portion 303 at the shaft 302. By fitting these, the relative movement of the end face lip seal 504 and the shaft 302 towards the shaft rotation direction is prevented.
The dented process portion 513 is formed by projecting out the portion of the side peripheral face of the reinforcement ring 509 by press processing. Also, in the dented process portion 513, as shown in the figure, the reinforcement ring 509 is exposed from the rubber layer; thereby it is fitted to the chamfer portion 303 of the shaft 302 as a metal touch (crimping or coupling of each metal component). Thereby, the reinforcement ring 509 (the end face lip seal 504) and the shaft 302 can be fitted even stronger.

Note that, such constitution can be made by forming dented portion by press processing after installing the end face lip seal to the appropriate position of the shaft, depending on the structure.

Note that, in the end face lip seal 504 shown in Fig.8A and Fig.8B, the notch 510 is formed at the reinforcement ring 509 as similar to the end face lip seal 204 which was referred by Fig.4A to Fig.4C as examples. The pressure of the sealing fluid directly acts to this portion, thus the end face lip seal 504 is constituted so that the radial interference force which presses the end face lip seal 504 to the shaft 302 is produced.

### The Seventh Embodiment

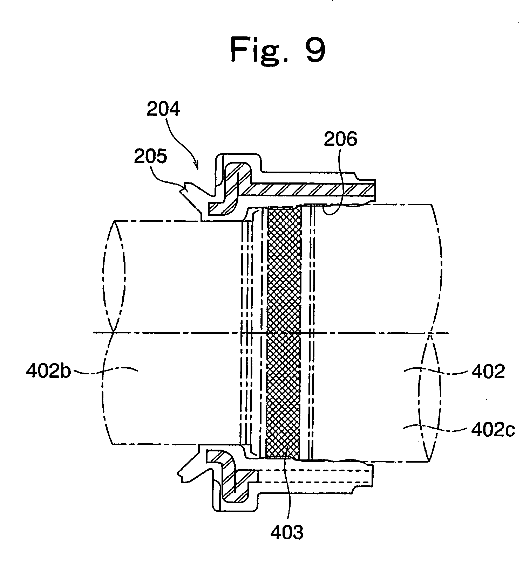

Furthermore, other embodiment of the engagement method of the end face lip seal and the shaft is explained as the seventh embodiment referring to Fig.9.
Fig.9 is a cross sectional diagram of the shaft axial direction showing the end face lip seal and the shaft being engaged.
The present embodiment has a shaft 402 with a knurling process portion, then the end face lip seal 204 and the shaft 402 are engaged by engaging the portion of the engagement portion 206 of the end face lip seal 204 to the knurling process portion 403 formed at this shaft 402.

As for the method of knurling process, a cutting knurling method is preferable.
As long as the knurling process is parallel in the axial direction (the spline process), the relative movement (sliding) of the end face lip seal 204 and the shaft 402 towards the shaft rotation direction can be prevented. Also, in case of mesh process, it is effective to suppress the relative movement to the both of the rotating direction and the axial direction. Note that, it is preferable to form the engagement portion of the shaft 402 in 2 steps in order to avoid the scratch on the sealing face when the end face lip seal 204 is press-inserted into the shaft 402. That is, preferably, the diameter of the shaft 402 of the portion where knurling process portion 403 is formed, is larger than that of the small portion 402b of the shaft 402 where the protruding lip 205 is placed, and is smaller than the large diameter portion 402c of the shaft 402 where the end face lip seal 204 engages.

Note that, in Fig.9, the end face lip seal 204 is shown in Fig.4A to Fig.4C as the end face lip seal engaged to the shaft 402 in which the knurling process portion 403 is formed. However, other than that, it is possible to engage the end face lip seal 104 shown in Fig.1, Fig.2A and Fig.2B, the end face lip seal 304 shown in Fig.5A to Fig.5C, the end face lip seal 404 shown in Fig.6A to Fg.6C, and the end face lip seal 504 shown in Fig.8A and Fig.8B or so.

### The Eighth Embodiment

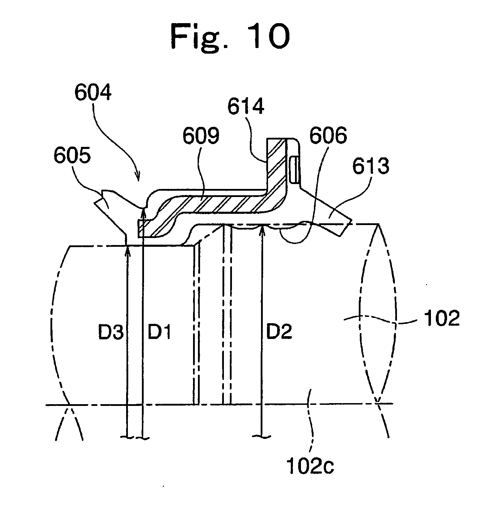

Also, further other embodiments of the end face lip seal according to the present invention will be explained as the eighth embodiment referring to Fig.10.
Fig.10 is a cross sectional diagram of the shaft axial direction showing the end face lip seal 604 and the shaft 102 being engaged.
The end face lip seal 604 shown in Fig.10 has a constitution that the reinforcement ring 609 is buried inside and the rubber material covering the peripheral thereof, as similar to each end face lip seal described in above. The protruding lip 605 is formed at the stationary ring 103 side end face of the end face lip seal 604, and also the other end face is formed as the engagement portion 606 which engages to the large diameter portion 102c of the shaft 102. Also, the protruding lip minimum diameter D1 of the end face lip seal 604 is formed so that it is larger than the diameter D2 of the engagement portion 606 which engages to the shaft 102. Thus, the external force caused by the pressure of the sealing fluid acting from 2 directions along the axial direction of the shaft 102 with respect to end face lip seal 604, is equilibrated or nearly the same; thereby the end face lip seal 604 is constituted so that it does not move towards the axial direction of the shaft 102. Also, the pressure of the sealing fluid acts as the radial interference force towards the diameter direction of the shaft 102, and the end face lip seal 604 is fixed to the shaft 102.

Further, in the end face lip seal 604 shown in Fig.10, the supporting lip 613 is formed on the end face of the opposite side where protruding lip 605 is formed, that is on the end face of the engagement portion 606 side. The supporting lip 613 is formed so that it closely contacts with the large diameter portion 102c of the shaft 102 by inclining towards the axial direction of the shaft 102 from the end face of the end face lip seal 604, as shown in the figure. The pressure of the sealing fluid acts against such supporting lip 613, thereby the supporting lip 613 is pushed against the shaft 102, by the radial interference force. As a result, the end face lip seal 604 is fixed even stronger to the shaft 102.

Also, in the end face lip seal 604, the end portion of the reinforcement ring 609 is exposed from the rubber material by projecting out from the outer peripheral face at the end portion of the side where the supporting lip 613 is formed. The end portion of the reinforcement ring 609 is formed as the face 614 in which it stands vertically to the axial direction. This standing face 614 is used as the face for placing against the installation jig 110 (refer to Fig.3A to Fig.3C), when assembling the end face lip seal 604 to the shaft 102. When assembling the end face lip seal 604, the end face lip seal 604 is aligned by contacting the installation jig 110 against the face formed by the hard material portion such as the reinforcement ring 609, thereby the alignment of the end face lip seal 604 can be performed precisely and easily compared to the case in which the installation jig 110 is placed against the flexible constitution portion such as the rubber material.
The end face lip seal may be realized by such embodiment.

### The Ninth Embodiment

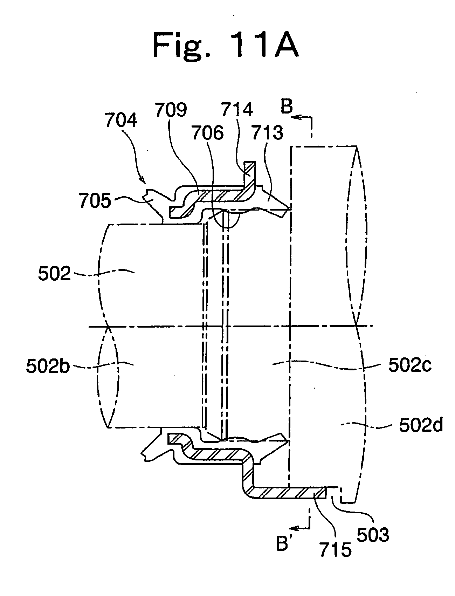

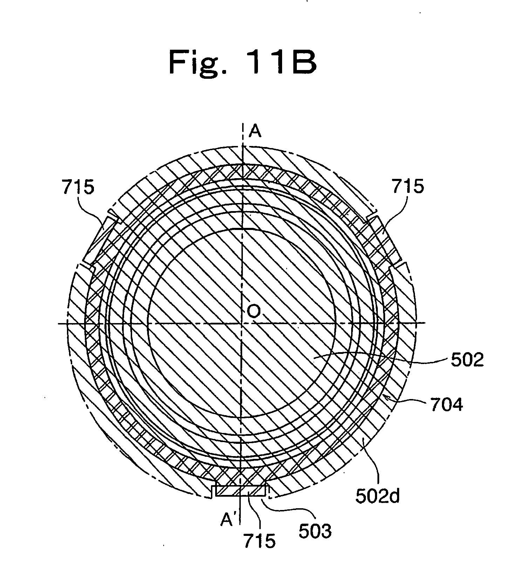

Also, further other embodiment of the end face lip seal is explained as the ninth embodiment by referring Fig.11A and Fig.11B.
Fig.11A and Fig.11B are diagrams showing other embodiment of the end face lip seal 704 thereof. Fig.11A is a cross sectional diagram (the cross sectional view at A-O-A' of Fig.11B) of the end face lip seal 704 installed to the shaft 502, and Fig.11B is a cross sectional diagram at B-B' of Fig.11A.
The basic constitution of the end face lip seal 704 shown in Fig.11A and Fig.11B are the same as the end face lip seal 604 shown in Fig.10. That is, at the end face lip seal 704, the supporting lip 713 is formed at the end face opposite to the protruding lip 705, and also the end portion of the supporting lip 713 side of the reinforcement ring 709 projects out towards the outer diameter direction and forms the standing face 714 in which the installation jig 110 (refer to Fig.3A to 3C) is placed against.

Then, particularly at the end face lip seal 704 shown in Fig.11A and Fig.11B, the portion of the end face of the reinforcement ring 709 formed with the standing face 714 thereof is further formed as the fitting nail 715 by extending in parallel to the axial direction of the shaft 502. In the end face lip seal 704 shown as Fig.11A and Fig.11B is formed with the fitting nail 715 at the three euipartition position of the reinforcement ring 709.
Further, a constitution for fitting this fitting nail 715 of the end face lip seal 704 is formed at the shaft 502. That is, at the shaft 502, diameter enlarged portion 502d is formed at the further inner side of the large diameter portion 502c where the engagement portion 706 of the end face lip seal 704 is engaged (the opposite side to the side which connects to the small diameter portion 502b). At the position, corresponding to the fitting nail 715, of the peripheral portion of this diameter enlarged portion 502d, the fitting notch 503 which fits with the fitting nail 715 is formed. The fitting nail 715 of the end face seal 704 fits to the fitting notch 503 of this shaft 502, thereby the relative movement of the end face lip seal 704 and the shaft 502 to the rotating direction of the shaft 502 is completely prevented mechanically, thus the reliability of the seal increases.
Note that, the fitting nail 715 of the end face lip seal 704 is formed integrally with the reinforcement ring 709 by the press process or so.

### The Tenth Embodiment

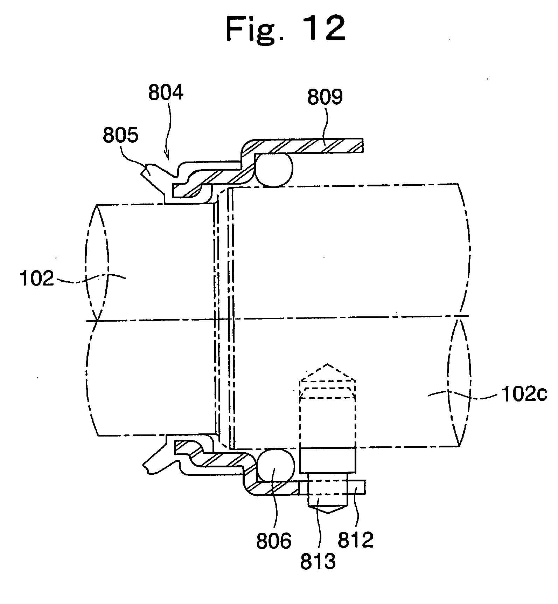

Also, the end face lip seal of each of the embodiment described in above had a constitution that the end face lip seal engages with the shaft by the rubber material provided on the inner peripheral surface of the reinforcement ring. However, O-ring or so can be used instead of the rubber material of the engagement portion.
The end face lip seal 804 having such constitution is explained as the tenth embodiment of the present invention by referring to Fig.12.
Fig.12 is a cross sectional diagram of the axial direction of the shaft showing the engagement of the end face lip seal 804 and the shaft 102.

As shown in Fig.12, in the end face lip seal 804, the rubber material covers the reinforcement ring 809 at the end face and the peripheral face of the side where the protruding lip 805 is formed, and at the side peripheral face of the opposite side of this protruding lip 805, the reinforcement ring 809 is exposed. Also, this reinforcement ring 809 engages to the large diameter portion 102c of the shaft 102 by placing O-ring 806 in between the shaft 102.
Also, knock pin 813 is press-inserted at the shaft 102 (the larger portion 102c) of the portion where the end face lip seal 804 is inserted. Also the fitting notch 812 which fits with the knock pin 813 is formed at the reinforcement ring 809 of the end face lip seal 804, and as shown in Fig.12, the knock pin 813 is fitted at this fitting notch 812.

The shaft seal apparatus of the present invention can be realized by the end face lip seal 804 having such constitution. That is, the external force caused by the pressure of the sealing fluid acts from 2 directions (referring to the opposite directions respectively) along the axial direction of the shaft 102 is equilibrated, or nearly the same, thus the end face lip seal 804 does not move towards the axial direction of the shaft 102. Also, since the end face lip seal 804 is fitted to the shaft 102 by the knock pin, the relative movement of the end face lip seal 804 and the shaft 102 in rotating direction is completely prevented mechanically, thus the reliability of the seal is improved.

### The Eleventh Embodiment

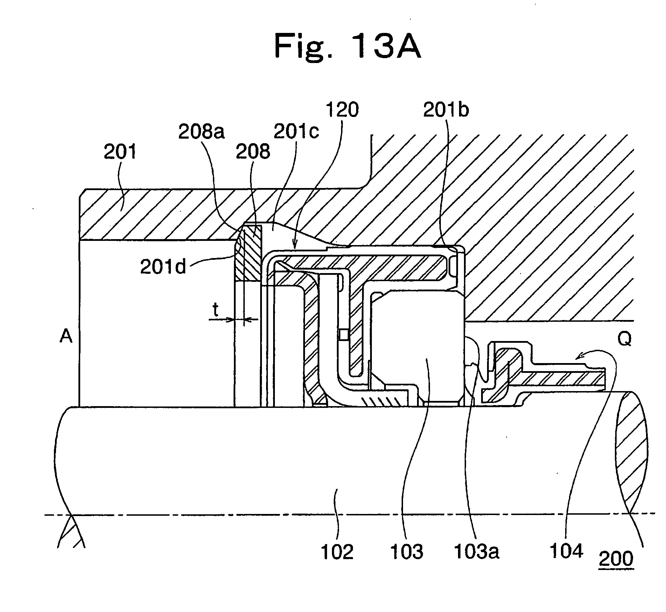

Also, as described in the above, as shown in Fig.1, the stationary ring 103 and the fixed side seal member 120 in each embodiment had a constitution that those were inserted inside the housing 101 along the shaft 102 by the seal fixing member 108 of roughly cylindrical form which has the screw groove at the outer peripheral face 108a, and the atmosphere A side back face was supported, further the stationary ring 103 and the fixed side seal member 120 were maintained between the reference face 101b of the housing and the seal fixing member 108. However, the constitution of the seal fixing member and the fixing method of the stationary ring 103 or so does not have to be limited to this, and it may be other constitution or method.
Another example of the constitution of the seal fixing member and the fixing method of the stationary ring 103 or so is explained as the eleventh embodiment of the present invention referring to Fig.13A to Fig.13C.

In the present embodiment, the stationary ring 103 and the fixed side seal member 120 are fixed to the housing by so called (whole use) stopper ring (snap ring). Particularly, in the present embodiment, the stationary ring 103 and the fixed side seal member 120 is fixed by using bevel shape stopper ring as the seal fixing member in which the outer peripheral end face is formed in a tapered form.

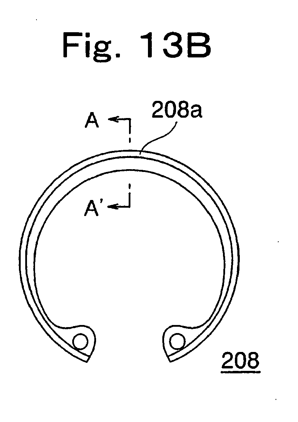

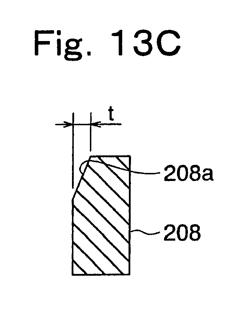

Fig.13A to fig.13C are diagrams showing the shaft seal apparatus 200 in which the stationary ring 103 and the fixed side seal member 120 are fixed using the bevel shape stopper ring 208. Fig.13A is a cross sectional diagram explaining the structure of the shaft seal apparatus thereof and the assembling method. Fig.13B is a front view diagram of the bevel shape stopper ring 208, and Fig.13C is a cross sectional diagram of the ring form portion of the bevel form stopper ring 208 thereof, and it is a cross sectional diagram at A-A' of Fig.13B.

In the shaft seal apparatus 200 shown in Fig.13A, the constitution and the position of the shaft 102, the stationary ring 103, the end face lip seal 104 and the fixed side seal member 120 are the same as the shaft seal apparatus 100 of the first embodiment described in the above referring to fig.1.

In the shaft seal apparatus 200, the groove 201c is formed at the inner peripheral face of the housing 201 where the bevel shape stopper ring 208 is engaged. The side face of the groove 201c of the axial direction atmosphere A side (the distal side from the end face lip seal 104) of the shaft 102 is a latching face 201d to support the bevel shape ring 208. This latching face 201d is formed as the inclined face incling to the atmosphere side towards the inner diameter direction.

On the other hand, the bevel shape stopper ring 208 used for fixing the stationary ring 103 and the fixed side seal member 120 comprises annular disk portion having planar form for example shown in Fig.13B and cross sectional form shown in fig.13C. The tapered face 208a is formed at the outer peripheral face thereof and so that it becomes thinner towards the outer diameter direction.

In the shaft seal apparatus 200 comprising such housing 201 and bevel shape stopper ring 208, the end face lip seal 104 is pushed into the predetermined position toward the sealing fluid Q side in the housing 201 along the shaft 102, and the stationary ring 103 and the fixed side seal member 120 are inserted into the housing 201. Then, the sliding face 103a of the stationary ring 103 is pushed into towards the end face lip seal 104 until it contacts to the reference face (step portion) 201b of the housing 201. Once the sliding face 103a of the stationary ring 103 contacts to the reference face (step portion) 201b of the housing 201, the bevel shape stopper ring 208 which is placed contacting to the atmosphere side back face of the fixed side seal member 120 is engaged into the groove 201c of the housing 201. Thereby the bevel shape stopper ring 208 does not move to the atmosphere side.
As a result, the stationary ring 103 and the fixed side seal member 120 are sandwiched between the bevel shape stopper ring 208 and the reference face (step portion)201b of the housing 201 and the shaft seal apparatus 200 having the constitution as shown in fig.13a is constituted.

Also in the shaft seal apparatus 200 having such constitution, the end face lip seal 104 and the stationary ring 103 are assembled reference to the reference face 201b of the housing 201, thus the stacking error according to the assembling is reduced, and the shaft seal apparatus 200 can be assembled precisely.

Also, in order to actually assemble the stationary ring 103 and the fixed side seal member 120 to the housing 201 having such constitution, the entire axial direction length of the stationary ring 103, fixed side seal member 120 and bevel shape stopper ring 208, must be the same as the length from the reference face 201d of the housing 201 to the tapered form latching face 201d must be the same. In the shaft seal apparatus 200 of the present embodiment, since the outer peripheral tapered face 208a of the bevel shape stopper ring 208 and the tapered form latching face 201d of the housing 201 are made to engage, the assembling capacity range is produced for the length t of the axial direction of the tapered face 208a (refer to Fig.13a and Fig.13C). Thus, the assembling of the stationary ring 103 and the fixed side seal member 120 can actually be performed easily and precisely. In other words, by making this capacity range within the defined size, the assembling can be done within the defined capacity range, and the stationary ring 103 and the fixed side seal member 120 can be assembled stably and precisely.

Also, the bevel stopper ring 208 does not need the stopper for the loosening as long as the member size is controlled. Thus, the stationary ring 103 and the fixed side seal member 120 can be placed with high reliability.
Also, the placing method of such stationary ring 103 and the fixed side seal member 120 using the bevel shape stopper ring 208 is an easy method, and the assembling and de-assembling can be done easily. Also, the members being used may be simple members. Therefore, the cost for manufacturing and placing the shaft seal apparatus, or the cost for the apparatus using those can be suppressed.
As such, the stationary ring 103 and the fixed side seal member 120 may be fixed using the bevel shape stopper ring 208.

As described in above, in the end face lip seal according to the present invention, the diameter D1 of the base portion of the protruding lip 105 is formed so that it is larger than the inner diameter D2 of the engagement portion 106 engaged with the shaft 102.
As a result, the external force F1' of the axial direction of the shaft 102 acting towards the protruding lip 105 side from the back end face 104b side, which acts to the end face lip seal 104, and the external force F1 of the axial direction of the shaft 102 acting towards the back end face 104b side from the protruding lip 105 can be equilibrated. Alternatively, the influence of the external force F1 can be made small; thereby the end face lip seal 104 can be maintained at the position without moving towards the axial direction of the shaft 102, even in the rotating device which the pressure P of the sealing fluid is high, or changes between high pressure and low pressure.

Also, as a result, there is no need for the assembling method such that the end face lip seal is aligned by placing against the step portion 102a of the shaft 102 which has been performed conventionally, and the end face lip seal 104 can be assembled in reference to the same reference face 101b of the housing 101 as the stationary ring 103. Thus, the relative position of the stationary ring 103 and the end face lip seal 104 can be made precisely at the designed value, and the shaft seal apparatus exhibiting appropriate sealing performance can be provided.

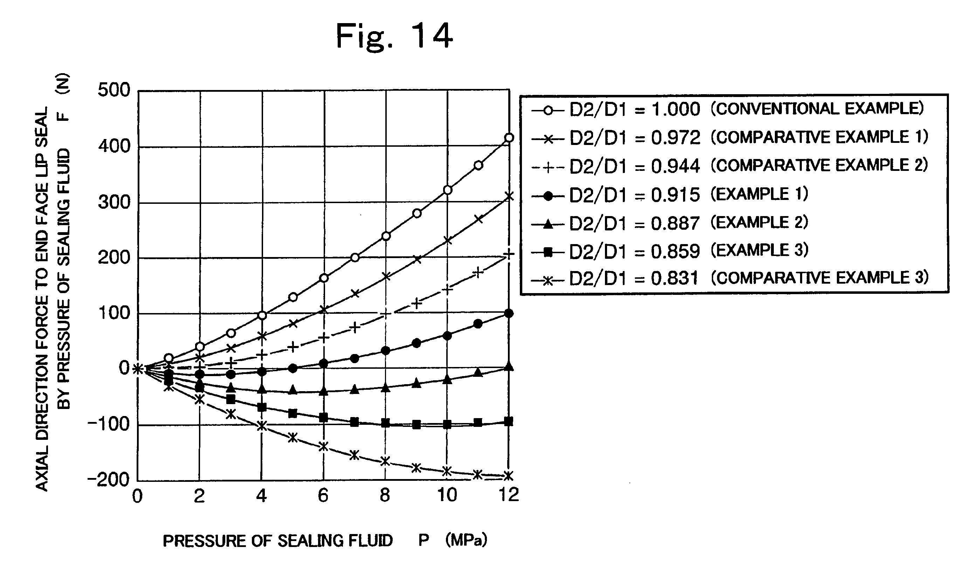

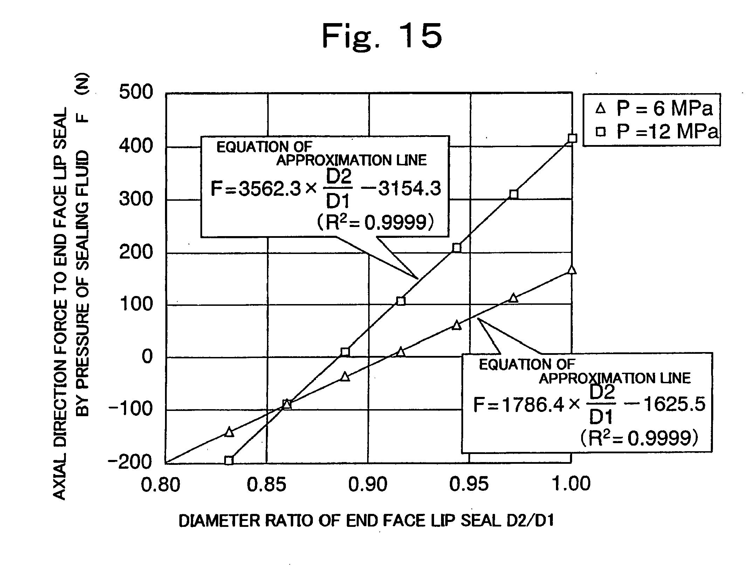

Here, the effect of making the diameter D1 of the base portion of the protruding lip 105 larger than the inner diameter D2 of the engagement portion 106, and the appropriate range of differences is explained referring to Fig.14 and Fig.15.
Fig.14 is a diagram showing a relation between the pressure of the sealing fluid and the axial direction force of the shaft 102 acting to the end face lip seal 104 caused by the pressure of sealing fluid, at the end face lip seal 104 having various different ratio of the diameter D1 of the base portion of the protruding lip 105 and the inner diameter D2 of the engagement portion 106. The relation shown in Fig.14 is an analysis result by the finite element method.

In Fig.14, the horizontal axis is the pressure P of the sealing fluid, and the maximum range thereof was set to 12MPa by taking the CO₂ compressor into considerations. An longitudinal axis is the force F of the axial direction of the shaft 102 acting on the end face lip seal 104, and is defined as F = F1-F1'. That is, when the value of the external force F is positive, the external force F1 acts and the force acts onto the end face lip seal 104 from the protruding lip 105 to the back end face 104b direction. Also, when the value of the external force F is negative, the external force F1' acts and the force acts onto the end face lip seal 104 from the back end face 104b to the protruding lip 105 direction.

Here, the relationship between the pressure of the sealing fluid and the force F of the axial direction acting on the end face lip seal 104 is shown in regards with the end face lip seal 104 having the ratio D2/D1 of the diameter D1 of the base portion of the protruding lip 105 and the inner diameter D2 of the engagement portion 106, from 1.000 to 0.831.
Note that, the diameter D1 of the base portion of the protruding lip 105 is 14.2mm, and the inner diameter D2 corresponding to this was varied; thereby the end face lip seal 104 of various condition of D2/D1 was constituted. Also, the inner diameter D2 of the engagement portion 106 is the only difference in each end face lip seal 104. For example, the cross sectional shape of the protruding lip 105, the inner diameter D3 of the end face lip seal 104 of the portion where the protruding lip 105 is formed, the force pushing the protruding lip 105 to the sliding face 103a due to the pressure P of the sealing fluid, and the capability of the shaft seal (sealing ability, friction-wear characteristic) or so of other conditions are all the same in each example. Also, as the rubber material of the end face lip seal 104, the known rubber material was used which is known to be suitable for the sliding use or the sealing material under high pressure use (for example, the rubber composition of the example 1 of Japanese Unexamined Patent Document 2002-80639 or so).

Note that, in Fig.14, when the diameter D1 of the base portion of the protruding lip 105 and the inner diameter of the engagement portion 106 is equal, that is when D2/D1 = 1.000, it is the same constitution as shown in Fig.18, thus this is considered as the conventional example. From the appropriateness of the result, when D2/D1 is 0.972, 0.944, and 0.831, it is considered as the comparative examples (the comparative examples 1 to 3) ; and when D2/D1 is 0.915, 0.887, and 0.859, it is considered as the examples (the examples 1 to 3).

As shown in Fig.14, in conventional example, the external force F (F1 direction) of about 410N act onto the end face lip seal 104 under the condition of the pressure P of sealing fluid is 12MPa, however as shown in the comparative example 1 and comparative example 2, as the D2/D1 becomes smaller, the external force F also declines. Note that, when D2/D1 is too small, as shown in the comparative example 3, the external force of the F1' direction becomes too large thus it is not preferable.

Note that, the most suitable value of D2/D1 may be selected by the designer or the user depending on its use.
For example, among the used pressure range of the CO₂ compressor, if one puts an importance to the reliability or the stability within the mid-pressure range of pressure 4MPa to 6MPa, the constitution of the example 1 having smaller absolute value of the external force F may be selected. Also, if one wishes to obtain the shaft seal apparatus 100 which is difficult to be influenced by the pressure change of the sealing fluid among all pressure range expected in CO₂ compressor, then the constitution of the example 2 having the small average absolute value and the changing rate of the external force F may be selected. Alternatively, if one puts an importance on the safety when the radial interference force is lost due to the problem of the engagement portion 106, then the constitution of the example 3 may be selected. That is, in the example 3, since the external force F is negative value (F1' direction) across all the pressure range expected in CO₂ compressor, even if the radial interference force is lost, the end face lip seal 104 moves towards the direction pushing to the stationary ring 103, thus at least the sealing fluid can be prevented from largely leaking from the sliding face 103a.

Also, the relation between the diameter ratio D2/D1 of the end face lip seal 104 at a given constant pressure P, and the external force F is shown in Fig.15. Fig. 15 shows the case in which the pressure P is 6MPa and 12Mpa.
As shown in Fig.15, the relation between the diameter ratio D2/D1 of the end face lip seal 104 and the external force F is approximately linear function. Thus, even in the constitution not shown in Fig.14, it is possible to interpolate using the relational equation shown in Fig.15, and the condition of the embodiment of the end face lip seal 104 that is the relation between the diameter D1 of the base portion of the protruding lip 105 and the inner diameter of the engagement portion 106 can be obtained further precisely.

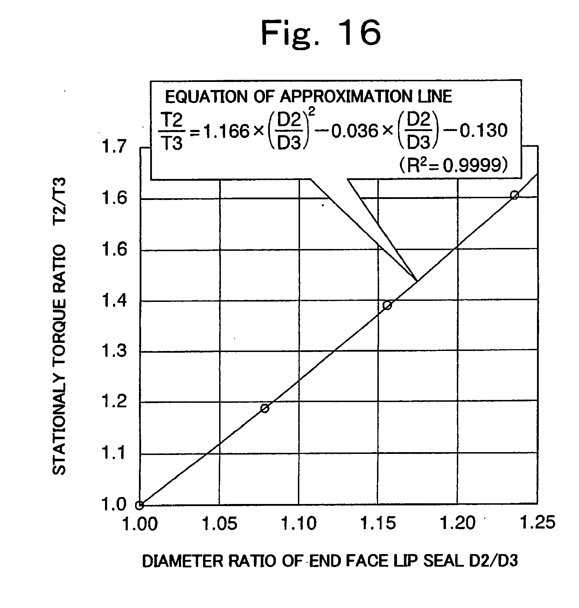

Also, in the end face lip seal 104 according to the present invention, the inner diameter D2 of the engagement portion 106 is larger than the diameter D3 of the portion where the protruding lip 105 is provided (the minimum diameter of the end face lip seal 104 at the end face lip seal 104 shown in Fig.1). This is a suitable condition in order to prevent the slipping of the end face lip seal 104 and the shaft 102. In regards with this, it is explained referring to Fig.16.

Fig.16 is a diagram showing the relation between the size ratio D2/D3 of the inner diameter D2 of the engagement portion 106 of the end face lip seal 104 and the minimum diameter D3 of the end face lip seal 104, and the stationary torque ratio (T2/T3).
The stationary torque T is a necessary force to relatively rotate the end face lip seal 104 and the shaft 102 towards the peripheral direction, and it is defined as stationary torque T = radial interference force x radius x friction coefficient. The larger the stationary torque T is, the more difficult to cause the slipping between the end face lip seal 104 and the shaft 102 is; thus it is a suitable design.

In Fig.16, the torque T2 indicates the stationary torque at the inner diameter D2 of the engagement 106, and the torque T3 indicates the stationary torque when the inner diameter of the engagement portion 106 is considered as the minimum diameter D3 of the end face lip seal 104. Note that, the radial interference force is a radial interference force caused by the rubber elasticity, further the designed size of the end face lip seal at the engagement portion (radius and the width in the axial direction) and the friction coefficient between the end face lip seal and the shaft, were the same.
As obvious from Fig.16, as the inner diameter D2 of the engagement portion 106 becomes larger than the minimum diameter D3 of the end face lip seal 104 , the stationary torque becomes larger.
Therefore, the designing condition of the appropriate end face lip seal 104 has the inner diameter D2 of the engagement portion 106 larger at least than the minimum diameter D3 of the end face lip seal 104.

### INDUSTRIAL APPLICABILITY

The shaft seal apparatus of the present invention and the assembling method thereof can be suitably applied to the rotating device such as the compressor for the air conditioning, the pump and the engine or so. Also, as long as it is a device to seal the sealing fluid between the housing and the shaft, it can be applied to arbitrary devices.

## Claims

1. A shaft seal apparatus (100) comprising a stationary ring (103) fixed to a housing (101) in which a shaft (102) passes through, and an end face lip seal (104) engaging with said shaft (102), wherein
a sealing fluid (Q) is sealed along said shaft (102) by closely contacting a protruding lip (105) of said end face lip seal (104) with a sliding face (103a) of said stationary ring (103) in a slidable manner; and
said shaft (102) is formed with step (102a) at the slightly sealing fluid (Q) side of said protruding lip (105) of said end face lip seal (104), and from this step (102a), the portion of the protruding lip (105) side is a small diameter portion (102b) and the portion in which said sealing fluid (Q) is placed is a large diameter portion (102c);
**characterized in that**
said protruding lip (105) which extends towards outside in a V-shaped cross-section is formed at the position facing against said sliding face (103a) of said stationary ring (103) which is one of the end portions of the end face lip seal (104),
said end face lip seal (104) covers over the step (102a) of said shaft (102) and engages with the shaft (102) capable to control an axial position with respect to said shaft (102) within the range crossing over the step (102a),
an interior portion of the end portion which is the opposite side of said protruding lip (105) of said end face lip seal (104) is formed as an engagement portion (106) to engage to said large diameter portion (102c) of said shaft (102),
a diameter (D1) of a minimum diameter portion of a sealing fluid side surface of said protruding lip (105) is larger than a diameter (D2) of said engagement portion (106) of said end face lip seal (104) engaging with the shaft (102), and
a diameter (D3) of a portion of said end face lip seal (104) where said protruding lip (105) is provided is smaller than the diameter (D2) of the part of said end face lip seal (104) engaging with the shaft (102).

2. The shaft seal apparatus as set forth in claim 1, wherein
said end face lip seal engages with said shaft at a position defined as a predetermined assembling length with respect to a reference position of said housing,
and
said stationary ring is placed by aligning with respect to said reference position.

3. The shaft seal apparatus as set forth in claim 1 or 2, wherein
said end face lip seal comprises a rubber made flexible portion constituting the surface of said protruding lip and the end face lip seal,
a reinforcement ring buried within said flexible portion to maintain a form of said end face lip seal , and
a part of a peripheral surface of said reinforcement ring is removed at an engagement portion with said shaft.

4. The shaft seal apparatus as set forth in any one of claims 1 to 3, further comprising a fitting means to fit said end face lip seal and said shaft so that said end face lip seal does not relatively rotate against said shaft.

5. The shaft seal apparatus as set forth in any one of claims 1 to 4, wherein said stationary ring is fixed to said housing by sandwiched between a step portion formed at said housing and a stopper ring placed within said housing, and other member is placed to hold the stationary ring therebetween depending on the needs.

## Patentansprüche

1. Wellendichtungsvorrichtung (100), die einen ortsfesten Ring (103), der an einem Gehäuse (101) fixiert ist, durch das eine Welle (102) hindurch führt, und eine Endflächen-Lippendichtung (104), die mit der Welle (102) im Eingriff ist, umfasst, wobei
ein Dichtungsfluid (Q) entlang der Welle (102) verkapselt ist, indem eine Gleitfläche (103a) des ortsfesten Rings (103) in einer gleitfähigen Weise unmittelbar an einer hervorstehenden Lippe (105) der Endflächen-Lippendichtung (104) anliegt; und
an der Welle (102) eine Schulter (102a) auf der geringfügig dichtenden Dichtungsfluid (Q)-Seite der hervorstehenden Lippe (105) der Endflächen-Lippendichtung (104) ausgebildet ist und ab dieser Schulter (102a) der Abschnitt auf der Seite der hervorstehenden Lippe (105) ein Abschnitt mit kleinem Durchmesser (102b) ist und der Abschnitt, in dem sich das Dichtungsfluid (Q) befindet, ein Abschnitt mit großem Durchmesser (102c) ist;
**dadurch gekennzeichnet, dass**
die hervorstehende Lippe (105), die sich in einem V-förmigen Querschnitt zur Außenseite erstreckt, an der Position ausgebildet ist, die der Gleitfläche (103a) des ortsfesten Rings (103) zugewandt ist, die einer der Endabschnitte der Endflächen-Lippendichtung (104) ist,
die Endflächen-Lippendichtung (104) sich über die Schulter (102a) der Welle (102) hinweg erstreckt und die Welle (102) in Eingriff nimmt und in der Lage ist, eine axiale Position mit Bezug auf die Welle (102) innerhalb des Bereichs, der über die Schulter (102a) hinweg reicht, zu steuern,
ein innerer Abschnitt des Endabschnitts, der die gegenüberliegende Seite der hervorstehenden Lippe (105) der Endflächen-Lippendichtung (104) bildet, als ein Eingriffnahme-Abschnitt (106) ausgebildet ist, um den Abschnitt mit großem Durchmesser (102c) der Welle (102) in Eingriff zu nehmen,
ein Durchmesser (D1) eines Abschnitts mit kleinstem Durchmesser einer Fläche auf der Dichtungsfluid-Seite der hervorstehenden Lippe (105) größer ist als ein Durchmesser (D2) des Eingriffnahme-Abschnitts (106) der Endflächen-Lippendichtung (104), der mit der Welle (102) im Eingriff ist, und
ein Durchmesser (D3) eines Abschnitts der Endflächen-Lippendichtung (104), wo die hervorstehende Lippe (105) angeordnet ist, kleiner ist als der Durchmesser (D2) des Teils der Endflächen-Lippendichtung (104), der mit der Welle (102) im Eingriff ist.

2. Wellendichtungsvorrichtung nach Anspruch 1, wobei die Endflächen-Lippendichtung mit der Welle an einer Position im Eingriff ist, die als eine zuvor festgelegte Montagelänge mit Bezug auf eine Referenzposition des Gehäuses definiert ist, und
der ortsfeste Ring durch Ausrichten mit Bezug auf die Referenzposition positioniert wird.

3. Wellendichtungsvorrichtung nach Anspruch 1 oder 2, wobei die Endflächen-Lippendichtung einen aus Gummi bestehenden flexiblen Abschnitt umfasst, der die Oberfläche der hervorstehenden Lippe und der Endflächen-Lippendichtung bildet,
ein Verstärkungsring in den flexiblen Abschnitt eingelassen ist, um eine Form der Endflächen-Lippendichtung beizubehalten, und
ein Teil einer Umfangsfläche des Verstärkungsrings an einem Abschnitt des Eingriffs mit der Welle entfernt ist.

4. Wellendichtungsvorrichtung nach einem der Ansprüche 1 bis 3, die des Weiteren ein Montagemittel umfasst, um die Endflächen-Lippendichtung und die Welle so zu montieren, dass sich die Endflächen-Lippendichtung nicht relativ zu der Welle drehen kann.

5. Wellendichtungsvorrichtung nach einem der Ansprüche 1 zu 4, wobei der ortsfeste Ring an dem Gehäuse fixiert ist, indem er zwischen einem an dem Gehäuse ausgebildeten Schulterabschnitt und einem innerhalb des Gehäuses angeordneten Endanschlagring eingeklemmt ist, und je nach den Erfordernissen ein weiteres Element angeordnet wird, um den dazwischenliegenden ortsfesten Ring zu halten.

## Revendications

1. Dispositif d'étanchéité d'arbre (100) comprenant une bague fixe (103) fixée à un boîtier (101) à travers laquelle passe un arbre (102), et un joint à lèvre à face d'extrémité (104) venant en prise avec ledit arbre (102), dans lequel
un fluide d'étanchéité (Q) est scellé le long dudit arbre (102) en établissant un contact étroit avec une lèvre en saillie (105) dudit joint à lèvre à face d'extrémité (104) avec une face de glissement (103a) de ladite bague fixe (103) de manière coulissante ; et
sur ledit arbre (102) est agencé une étage (102a) du côté du fluide légèrement étanche (Q) de ladite lèvre en saillie (105) dudit joint à lèvre à face d'extrémité (104), et depuis cette étage (102a), la portion du côté de la lèvre en saillie (105) est une portion de petit diamètre (102b) et la portion dans laquelle ledit fluide d'étanchéité (Q) est placé est une portion de grand diamètre (102c) ;
**caractérisé par le fait que**
ladite lèvre en saillie (105) qui s'étend vers l'extérieur en une section transversale en forme de V est formée au niveau de la position faisant face à ladite face de glissement (103a) de ladite bague fixe (103) qui est une des portions d'extrémité du joint à lèvre à face d'extrémité (104),
ledit joint à lèvre à face d'extrémité (104) couvre l'étage (102a) dudit arbre (102) et vient en prise avec l'arbre (102) apte à commander une position axiale par rapport audit arbre (102) dans la plage passant par dessus l'étage (102a),
une portion intérieure de la portion d'extrémité qui est le côté opposé de ladite lèvre en saillie (105) dudit joint à lèvre à face d'extrémité (104) a la forme d'une portion de mise en prise (106) pour venir en prise avec ladite grande portion de diamètre (102c) dudit arbre (102),
un diamètre (D1) d'une portion de diamètre minimum d'une surface latérale de fluide d'étanchéité de ladite lèvre en saillie (105) est plus important qu'un diamètre (D2) de ladite portion de mise en prise (106) dudit joint à lèvre à face d'extrémité (104) venant en prise avec l'arbre (102), et
un diamètre (D3) d'une portion dudit joint à lèvre à face d'extrémité (104) où ladite lèvre en saillie (105) est prévue plus petite que le diamètre (D2) de la partie du joint à lèvre à face d'extrémité (104) venant en prise avec l'arbre (102).

2. Dispositif d'étanchéité d'arbre selon la revendication 1, dans lequel
- ledit joint à lèvre à face d'extrémité (104) vient en prise avec ledit arbre à une position définie comme une longueur d'assemblage prédéterminée par rapport à une position de référence dudit boîtier, et
- ladite bague fixe est placée en alignement par rapport à ladite position de référence.

3. Dispositif d'étanchéité d'arbre selon la revendication 1 ou 2, dans lequel ledit joint à lèvre à face d'extrémité comprend
- une portion souple en caoutchouc constituant la surface de ladite lèvre en saillie et le joint à lèvre à face d'extrémité,
- une bague de renfort enfoncée dans ladite portion souple pour maintenir une forme dudit joint à lèvre à face d'extrémité, et
- une partie d'une surface périphérique de ladite bague de renfort est retirée au niveau d'une portion de mise en prise avec ledit arbre.

4. Dispositif d'étanchéité d'arbre selon l'une quelconque des revendications 1 à 3, comprenant en outre un moyen de fixation pour fixer ledit joint à lèvre à face d'extrémité et ledit arbre de telle sorte que ledit joint à lèvre à face d'extrémité ne tourne pas relativement contre ledit arbre.

5. Dispositif d'étanchéité d'arbre selon l'une quelconque des revendications 1 à 4, dans lequel ladite bague fixe est fixée audit boîtier par enserrement entre une portion étagée formée au niveau dudit boîtier et une bague d'arrêt placée à l'intérieur dudit boîtier, et un autre élément est placé pour maintenir la bague fixe entre elles en fonction des besoins.
